# EUROPÄISCHE PATENTSCHRIFT

(11) **EP 3 299 642 B1**
(45) Veröffentlichungstag und Bekanntmachung des Hinweises auf die Patenterteilung: **23.10.2019**
(21) Anmeldenummer: 17188747.4
(22) Anmeldetag: 31.08.2017
(51) Int. Cl.: F16C 11/06, F16C 11/10, B60Q 1/04, B60Q 1/068, B60R 11/00

(54) **FAHRZEUGSCHEINWERFER MIT KUGELGELENK**
VEHICLE HEADLIGHT WITH BALL JOINT
OPTIQUE DE VÉHICULE AVEC JOINT PIVOTANT

(30) Priorität: 12.09.2016 AT 508072016
(43) Veröffentlichungstag der Anmeldung: 28.03.2018
(73) Patentinhaber: ZKW Group GmbH, 3250 Wieselburg (AT)
(72) Erfinder: Bachler, Jörg, 3652 Leoben (AT); Hungendorfer, Martin, 3642 Häusling/Dunkelsteinerwald (AT); Hauer, Clemens, 3261 Steinakirchen am Forst (AT)
(74) Vertreter: Patentanwaltskanzlei Matschnig & Forsthuber OG

(56) Entgegenhaltungen:
- EP-A1- 0 271 676
- WO-A1-2011/096372
- DE-A1- 19 638 031
- US-A- 5 853 261

## Beschreibung

Die Erfindung betrifft einen Fahrzeugscheinwerfer, insbesondere zur Erzeugung einer Fernlicht- und/ oder einer Abblendlicht-Lichtverteilung.

Beim Einbau eines Fahrzeugscheinwerfers in ein Kraftfahrzeug wird der Scheinwerfer beispielsweise an einem Tragrahmen, einem Karosserieteil oder einer anderen Komponente des Fahrzeugs montiert. Die genannten Teile sowie der Scheinwerfer selbst weisen teils hohe Toleranzen in deren Abmessungen, aber auch in der Position und Ausführungspräzision der zur Montage vorgesehenen Befestigungseinheiten, wie Bohrungen, Gewinde, Ausrichtstifte, Schrauben, Nieten etc. auf.

Zum Ausgleich derartiger Toleranzen gibt es verschiedene Konzepte zur Befestigung eines Fahrzeugscheinwerfers in ein Kraftfahrzeug, wie beispielsweise durch Verwendung einer Schraube, die an einem Ende eine Kugel aufweist, die gemeinsam mit einer Gelenkspfanne zur Bildung eines Kugelgelenks verwendet werden kann. Derartige Kugelgelenke können fixierbar aufgeführt sein, um die Verbindung an einer gewünschten Position zu arretieren und eine feste Verbindung zwischen den beiden durch das Kugelgelenk verbundenen Teile zu erhalten.

Aus der US 5 853 261 A ist eine Fixiervorrichtung für eine Befestigungsschraube bekannt, wobei die Befestigungsschraube dazu vorgesehen ist, einen Fahrzeugscheinwerfer an einem Tragrahmen eines Fahrzeugs zu fixieren.

Kugelgelenke nach dem Stand der Technik weisen den Nachteil auf, dass sie über niedrige Feststellmomente verfügen. Mit anderen Worten kann die Haltekraft des fixierten Kugelgelenks für manche Anwendungen unzureichend sein, was insbesondere bei derartigen Verbindungen zwischen einem Fahrzeugscheinwerfer und einem fahrzeugseitigen Montageteil auftreten kann, da bei Kraftfahrzeugen unter anderem starke Vibrationen und hohe jahreszeitbedingte Temperaturschwankungen Einfluss auf die Feststellkraft der Fixierung einer Kugelgelenkverbindung haben können.

In einem anderen Aspekt sind derzeit verfügbare Kugelgelenke umständlich im Zusammenbau. Auch in Wartungssituationen kann es erforderlich sein, ein Kugelgelenk in dessen Bestandteile zu zerlegen. Kugelgelenke nach dem Stand der Technik können eine erhöhte Komplexität bei der Hantierung und beim Zerlegen in dessen Einzelteile aufweisen. Dadurch können die Service-Kosten sehr hoch werden. Zusätzlich können manche Teile eines Kugelgelenks, insbesondere die Gelenkspfannen, häufig nicht vollkommen zerstörungsfrei entnommen werden. Die Folge kann eine Materialschwächung beziehungsweise Materialermüdung sein, die zu einem vorzeitigen Verschleiß eines wieder zusammengesetzten Kugelgelenks führen kann.

Die Erfindung setzt sich zur Aufgabe die genannten Nachteile zu überwinden.

Die Aufgabe wird durch einen Fahrzeugscheinwerfer gemäß Anspruch 1 gelöst.

Unter Steuerkonturen werden grundsätzlich geometrische Erhebungen aus einer räumlichen Fläche oder beispielsweise auch begrenzende Kanten auf einem ersten Körper verstanden, die dazu dienen, mit zugeordneten Flächen auf einem zweiten Körper, die hier als Steuerflächen bezeichnet werden, oder anderen Steuerkonturen wechselzuwirken. Dabei können Steuerkonturen als Kanten, beispielsweise mit dreieck- oder rechteckförmigem Querschnitt, oder Rundungen ausgebildet sein, die einen geraden oder räumlich gekrümmten Verlauf aufweisen. Die Steuerkonturen können auf einem Teil einer Oberfläche eines Körpers oder auch längs des Umfangs des Körpers oder auch einem Verlauf folgen, der dem Umfang mehrmals folgt, beispielsweise in Form eines Gewindes, in der zwei Steuerkonturen miteinander wechselwirken können. Grundsätzlich kann also eine Steuerfläche auch als Steuerkontur ausgeführt sein.

Steuerkonturen dienen allgemein gemeinsam mit zugeordneten Steuerflächen dazu, eine definierte relative Bewegung zwischen dem ersten und zweiten Körper zu gewährleisten, indem die Steuerkonturen über die Steuerflächen gleiten.

In einem ersten Aspekt der Erfindung wird durch zumindest eine Steuerkontur erreicht, dass eine Anpresskraft radial ausgeübt werden kann, die die Gelenkskugel mit der Gelenkspfanne im festgemachten Zustand fixiert. Durch diese besonders einfache Maßnahme kann eine zwischen der Gelenkspfanne und der Gelenkshülse radial wirkende Kraft erzeugt werden, die die Gelenkspfanne auf die Gelenkskugel drückt und eine besonders hohe Feststellkraft des Kugelgelenks erreicht werden kann.

Die Erfindung kann weiter verbessert werden, indem die zumindest eine Steuerkontur durch eine erste Steuerkontur gebildet ist, die an der Gelenkshülse gelegen ist, bevorzugt in einem Bereich der innenliegenden Oberfläche der Gelenkshülse, besonders bevorzugt in einem Bereich der ersten Öffnung der Gelenkshülse. Diese erste Steuerkontur ist sehr einfach an der Gelenkshülse realisierbar. Ferner kann die erste Steuerkontur eine Anpresskraft auf eine Gelenkskugel bewirken, die auf eine erste Hemisphäre der Gelenkskugel ausgeübt wird.

Die erste Hemisphäre der Gelenkskugel bezeichnet eine Hälfte der Oberfläche einer gedachten Kugel, deren Oberfläche sich überwiegend mit jener der Gelenkskugel deckt.. Die erste Hemisphäre erstreckt sich von dem Ende des Gelenkszapfens, an dem die Gelenkskugel angeordnet ist, beziehungsweise der Stirnseite des Gelenkszapfens bis zum Äquator, das heißt dem größtem Umfang der Kugel quer zur Achse des Gelenkszapfens, der Gelenkskugel.

Die zweite Hemisphäre der Gelenkskugel erstreckt sich vom Äquator bis zum Beginn des Gelenkschafts des Gelenkszapfens.

Die Erfindung kann weiter verbessert werden, indem die zumindest eine Steuerkontur durch eine zweite Steuerkontur gebildet ist, die an der Gelenkspfanne gelegen ist, bevorzugt in einem Bereich der außenliegenden Oberfläche der Gelenkspfanne, besonders bevorzugt auf der außenliegenden Oberfläche der Flügel.

Durch Verwendung der zweiten Steuerkontur kann erreicht werden, dass die Gelenkskugel bei Krafteinwirkung während der Fixierung des Kugelgelenks in die Gelenkspfanne hineingeschoben wird und folglich eine axial wirkende Kraft erzeugt wird, das heißt der geometrische Mittelpunkt der Gelenkskugel in axialer Richtung verschoben wird. Dadurch kann die Gelenkspfanne sehr tolerant gegen Größenvariationen der Gelenkskugel sein, die durch Bauteiltoleranzen hervorgerufen werden können, aber auch von unterschiedlichen Durchmessern verschiedener Bauformen und Baugrößen der Gelenkskugel herrühren. Es ist klar, dass dies nur innerhalb bestimmter sinnvoller Grenzen möglich sein kann. Durch das Hineinschieben einer kleineren Gelenkskugel gegenüber dem Nominaldurchmesser wird die Umklammerung der Gelenkskugel durch die Flügel besonders großflächig und fest.

Werden jedoch zwei Steuerkonturen für das Kugelgelenk verwendet, so kann die Gelenkskugel in ihrem geometrischen Mittelpunkt bei der Fixierung des Kugelgelenks durch diese Steuerkonturen zentriert gehalten werden. Dies kann bei Verwendung einer kleineren Gelenkskugel gegenüber dem Nominaldurchmesser vorteilhaft sein, da der räumliche Winkeleinstellbereich des Kugelgelenks dadurch größer sein kann, beziehungsweise ein größerer Durchmesser des Gelenkschafts des Gelenkszapfens eingesetzt werden kann, ohne dass die Flügel am Gelenkschaft anliegen.

Ferner ist es vorteilhaft, wenn die zumindest eine zweite Steuerkontur in einem Bereich auf der Außenoberfläche der Gelenkspfanne, insbesondere auf der Außenoberfläche der Flügel, gelegen ist, die mit der Gelenkshülse zusammenwirkt, wobei die zumindest eine zweite Steuerkontur an einem Ende der Flügel gelegen ist

Eine besonders hohe Feststellkraft des Kugelgelenks kann erreicht werden, wenn zumindest zwei Steuerkonturen, die durch erste und zweite Steuerkonturen gebildet sind, am Kugelgelenk ausgebildet sind, insbesondere wenn zweite Steuerkonturen auf jedem Flügel ausgebildet sind.

Ferner kann die zweite Steuerkontur eine Anpresskraft auf eine Gelenkskugel bewirken, die auf eine zweite Hemisphäre der Gelenkskugel ausgeübt wird und die zumindest eine zweite Steuerkontur dadurch für eine besonders feste Feststellung beziehungsweise Fixierung des Kugelgelenks sorgen kann.

Wenn zumindest zwei unterschiedliche Steuerkonturen in Form von ersten und zweiten Steuerkonturen im Kugelgelenk ausgebildet sind, so können auf beide Hemisphären jeweils Anpresskräfte ausgeübt werden, was in einer besonders festen Fixierung des Kugelgelenks resultieren kann. Mit anderen Worten kann eine zweiteilige Krafteinwirkung auf beide Hemisphären erfolgen. Es ist klar, dass die ersten und zweiten Steuerkonturen jeweils ein oder mehrere erste und zweite Steuerkonturen umfassen können.

Besonders vorteilhaft ist es, wenn die zumindest eine zweite Steuerkontur an einem Ende der Flügel gelegen ist und bevorzugt in einem Bereich, dessen Länge 20% der Länge der Flügel, besonders bevorzugt 10% der Länge der Flügel beträgt, gelegen ist.

Es ist außerdem besonders günstig, wenn die zumindest eine zweite Steuerkontur in zusammengebautem Zustand des Kugelgelenks in einer Ebene quer zur Einbaurichtung gelegen ist und deren radialer Abstand von einem ersten Radius in einem ersten Drehwinkel um die gedachte Längsachse der Gelenkpfanne zu einem zweiten Radius in einem zweiten Drehwinkel um die gedachte Längsachse der Gelenkpfanne übergeht. Dabei ist der erste Radius kleiner als der zweite Radius. Ferner geht die zumindest eine zweite Steuerkontur bevorzugt weiter zu einem dritten Radius in einem dritten Drehwinkel um die gedachte Längsachse der Gelenkpfanne über. Außerdem entspricht der dritte Radius vorzugsweise dem ersten Radius, oder der dritte Radius entspricht dem zweiten Radius. Vorzugsweise entspricht der erste Drehwinkel gegenüber dem zweiten Drehwinkel demselben Betrag, wie der zweite Drehwinkel gegenüber dem dritten Drehwinkel. Durch die genannte Ausführung der Gelenkspfanne wird erreicht, dass durch eine Drehbewegung eine präzise dosierbare Krafteinwirkung auf die Gelenkspfanne erzeugt werden kann, die eingerichtet ist, die Flügel an die Gelenkskugel zu pressen. Eine symmetrische Form der Ausführung ist deshalb besonders günstig, da die Gelenkspfanne in beide Richtungen um deren Längsachse verdreht werden kann, um das Kugelgelenk zu fixieren. Die symmetrische Form wird dadurch erzielt, dass der erste Radius im ersten Drehwinkel dem dritten Radius im dritten Drehwinkel entspricht. Entspricht der dritte Radius im dritten Drehwinkel aber dem zweiten Radius im zweiten Drehwinkel, so ist die Ausführung unsymmetrisch und nur eine Drehrichtung ist bei der Fixierung des Kugelgelenks möglich. Dies kann durch Einbauvorschriften gefordert sein, weist aber auch den Vorteil auf, dass die Verdrehung der Gelenkspfanne bei einem Endanschlag an der Gelenkshülse begrenzt ist, was gewährleisten kann, dass bei Einbau die korrekte Endposition durch die Sinne des Monteurs erfasst werden können. Im Unterschied zur unsymmetrischen Form weist die symmetrische Form keinen derartigen Endanschlag auf, allerdings kann die Mittelstellung im zweiten Drehwinkel durch eine hörbare und/ oder fühlbare mechanische Verrastung und/oder eine optische Markierung gekennzeichnet sein.

Die Fixierung des Kugelgelenks erfolgt dann besonders präzise, wenn das Kugelgelenk zumindest eine Steuerfläche umfasst, die eingerichtet ist, mit der zumindest einen Steuerkontur zusammenzuwirken und die zumindest eine Steuerkontur an die zumindest eine Steuerfläche zu drücken. Ferner kann ein axiales Verrutschen zwischen der Gelenkspfanne und der Gelenkshülse gegen die Einbaurichtung verhindert werden.

Es ist dabei besonders vorteilhaft, wenn die zumindest eine Steuerfläche durch zumindest eine erste Steuerfläche gebildet ist, die bevorzugt in einem Bereich der außenliegenden Oberfläche der Gelenkspfanne und besonders bevorzugt an jenem Ende der Flügel gelegen ist, das in Einbaurichtung zeigt. Dadurch kann erreicht werden, dass bei einer Drehbewegung zwischen der Gelenkshülse und der Gelenkspfanne die zumindest eine zugeordnete erste Steuerkontur besonders präzise entlang der Steuerfläche gleiten kann und folglich einem präzisen Bewegungsweg zur Ausübung einer Anpresskraft folgen kann.

Es ist außerdem besonders vorteilhaft, wenn die zumindest eine Steuerfläche durch eine zweite Steuerfläche gebildet ist, die bevorzugt in einem Bereich der innenliegenden Oberfläche der Gelenkshülse gelegen ist. Dadurch kann erreicht werden, dass bei einer Drehbewegung zwischen der Gelenkshülse und der Gelenkspfanne die zumindest eine zugeordnete zweite Steuerkontur besonders präzise entlang der Steuerfläche gleiten kann und folglich einem präzisen Bewegungsweg zur Ausübung einer Anpresskraft folgen kann.

Ferner ist es günstig, wenn in der Position des zweiten Drehwinkels die zumindest eine zweite Steuerkontur zumindest eine Lasche aufweist, die sich axial und in einem radialen Abstand des zweiten Radius erstreckt und eingerichtet ist, durch Wechselwirkung mit der zweiten Steuerfläche eine radiale Anpresskraft auf die Gelenkskugel auszuüben. Durch eine radiale Krafteinwirkung, die beispielsweise durch eine Steuerkontur bewirkt wird, kann die Lasche die Gelenkspfanne an die Gelenkskugel gedrückt werden. Die Form der Lasche gewährleistet eine präzise Wechselwirkung mit einer zusammenwirkenden Steuerfläche, wodurch eine präzise steuerbare Krafteinwirkung hervorgerufen werden kann.

Das Kugelgelenk ist besonders tolerant gegen Ungenauigkeiten und Toleranzen der Gelenkskugel, sowie auch für innerhalb gewisser Grenzen befindlicher geringerer Abmessungen der Gelenkskugel geeignet.

In einem weiteren Aspekt der Erfindung ist es besonders vorteilhaft, wenn sich die Flügel in einem unverstellten Zustand, in dem eine gedachte Längsachse des Gelenkszapfens mit einer gedachten Längsachse der Gelenkspfanne übereinstimmt, zumindest bis zur einer Gelenkskante erstrecken, wobei auf der Oberfläche des Gelenkszapfens zwischen dem Gelenkschaft und der Gelenkskugel die entlang dem Umfang der Gelenkspfanne verlaufende Gelenkskante ausgebildet ist. Dadurch kann erreicht werden, dass dessen Feststellmoment maximiert wird, indem die maximal verfügbare Oberfläche der Gelenkskugel zur Ausbildung des Kugelgelenks herangezogen wird und die Flügel die Kugel möglichst großflächig umschließen.

Der Gelenkszapfen kann räumlich auf die Gegebenheiten bei einer Montage beispielsweise bei einem Fahrzeugscheinwerfer eingestellt und an einer Position fixiert werden. Um dies zu erreichen weist der Gelenkszapfen zwischen der Gelenkskugel und dem Gelenkschaft eine Gelenkskante auf, die gemeinsam mit den Flügeln der Gelenkspfanne den räumlich drehbaren Bereich der Verbindung zwischen Gelenkskugel und Gelenkspfanne begrenzt und bis zu der die Flügel der Gelenkspfanne im unverstellten Zustand reichen. Durch die axiale Länge der Flügel kann die wirksame Gelenksfläche des Kugelgelenks, das durch die miteinander wirkenden Flächen des Gelenkskugel und der Gelenkspfanne bestimmt ist, optimal genutzt werden.

Die Gelenkskante ist dabei nicht auf ein tatsächliches Vorhandensein einer um den Umfang verlaufenden Kante beschränkt. Die Gelenkskante kann alternativ durch einen Übergang zwischen einer konvexen Kurvenform der Gelenkskugel und einer konkaven Kurvenform eines Übergangs zwischen dem Gelenkschaft und der Gelenkskugel gebildet sein. Folglich ist die Gelenkskante in diesem Fall eine gedachte Linie, die längs des Umfangs verläuft und den Übergang zwischen der Gelenkskugel und dem Gelenkschaft beschreibt.

Außerdem zeichnet sich das Kugelgelenk dadurch aus, dass das Kugelgelenk einfach in dessen Einzelteile zerlegt werden kann, was der Haltbarkeit des Einzelteile sowie der Hantierbarkeit beim Zerlegen des Kugelgelenks zuträglich ist.

Genannte Gelenkszapfen sind kommerziell als Standardware erhältlich und weisen beispielsweise am Gelenkszapfen ein Gewinde auf. Solche Gelenkszapfen können derart ausgeführt sein, dass der geometrische Mittelpunkt der Gelenkskugel auf der Verlängerung der gedachten Längsachse des Gelenkschafts gelegen ist. Es ist daher vorteilhaft, wenn das Kugelgelenk die Verwendung solcher Standardware unterstützt.

Zusätzlich kann die genannte Standardware derart ausgeführt sein, dass die Gelenkskugel auf der Seite, die dem Gelenkschaft abgewandt ist, abgeflacht ist und vorzugsweise eine Montageausnehmung aufweist. Die Montageausnehmung kann beispielsweise eine Montageausnehmung in Form einer Imbus- oder Torx-Öffnung zur Aufnahme eines entsprechenden Schraubenziehers aufweisen, mittels welcher ein auf dem Gelenkschaft befindliches Gewinde beispielsweise in einen Tragrahmen, ein Karosserieteil oder einer anderen Einbaukomponente eines Fahrzeugs verschraubt werden kann.

Es ist außerdem günstig, wenn der Durchmesser der Gelenkskugel größer ist als der radiale Durchmesser des Gelenkschafts und ein Übergang zwischen Gelenkschaft und Gelenkskugel durch eine entlang dem Umfang der Gelenkspfanne verlaufende konkave Fläche gebildet ist.

Die wirksame Gelenksfläche des Kugelgelenks kann besonders vorteilhaft genützt werden, wenn die Gelenkskante durch eine Schnittkurve der im Wesentlichen konvexen Oberfläche der Gelenkskugel und der konkaven Fläche des Übergangs vom Gelenkschaft zur Gelenkskugel ausgebildet ist, wie dies bei Standardware häufig gegeben ist.

Es ist besonders vorteilhaft, wenn die Flügel der Gelenkspfanne in ihrer axialen Länge über die Gelenkskante hinaus verlaufen und dabei die radialen Abstände der Flügel zur gedachten Achse des Gelenkschafts zumindest nicht geringer werden. Durch eine entsprechende Auslegung der Flügel kann erreicht werden, dass die Beweglichkeit des Kugelgelenks in einem nicht fixierten Zustand möglichst wenig eingeschränkt wird.

In einem weiteren Aspekt weisen die Flügel zwischen deren beiden Enden einen verjüngenden Querschnitt in radialer Richtung auf, um einen Zusammenbau der einzelnen Bestandteile des Kugelgelenks möglichst einfach durchführbar zu machen. Durch die Reduktion des Querschnitts wird eine Flexibilität der Flügel erreicht, die erlauben, dass die Gelenkskugel ohne große Krafteinwirkung in die Gelenkspfanne eingeführt werden kann. Dies reduziert beispielsweise die Materialermüdung und kann für eine erhöhte Lebensdauer des Kugelgelenks sorgen, insbesondere bei mehrmaligem Zerlegen des Kugelgelenks in dessen Einzelteile.

Es ist besonders günstig, wenn die Flügel im fixierten Zustand des Kugelgelenks durch die Gelenkshülse jeweils in Bereichen neben dem in radialer Richtung verjüngten Querschnitt an die Gelenkskugel gedrückt werden, bevorzugt jeweils durch eine Steuerkontur und eine Steuerfläche. Dadurch wird erreicht, dass die Festhaltekraft des Kugelgelenks besonders hoch ist, da eine zweiteilige Krafteinwirkung gemäß dem vorher Gesagten erfolgt.

Gemäß der Erfindung ist zwischen den beiden Enden der Flügel jeweils ein entlang dem Umfang verlaufendes Filmscharnier ausgebildet. Durch Einsatz eines Filmscharniers kann eine Gelenkskugel noch einfacher in die Gelenkspfanne eingeführt werden, indem die Flügel sehr einfach auseinandergespreizt werden können.

Es ist zusätzlich vorteilhaft, wenn an der Gelenkspfanne im nicht fixierten Zustand zwischen den Flügeln jeweils ein axial verlaufender Spalt ausgebildet ist. Dadurch können in der Gelenkspfanne Toleranzen im Durchmesser der Gelenkskugel kompensiert werden. Innerhalb bestimmter Grenzen können dadurch sogar Gelenkskugeln mit unterschiedlichem Durchmesser durch ein und dasselbe Kugelgelenk aufgenommen werden, was die Komplexität des Produktsortiments kostengünstig beeinflussen kann, indem weniger Varianten an Gelenkspfannen erforderlich sein können.

Es ist besonders günstig, wenn die Gelenkspfanne im Bereich ihrer Flügel in deren Außenkontur durch die Form eines Kegelstumpfs begrenzt ist, wobei der Kegelstumpf von den offenen Enden der Flügel hin zu dem die Flügel verbindenden Bereich der Gelenkspfanne im Außenradius abnimmt. Die Außenkontur liegt radial außenliegend und begrenzt die Geometrie der Gelenkspfanne und deren Flügel. Die beschriebene Form der Gelenkspfanne ist günstig, da eine Gelenkshülse über die Flügel der Gelenkspfanne geschoben werden kann und durch den Kegelstumpf die Gelenkshülse auf die Gelenkspfanne geschoben oder gezogen werden kann, wobei die Flügel der Gelenkspfanne dann derart mit der Gelenkshülse zusammenwirken, dass die Flügel gegen die Gelenkskugel gedrückt werden. Die Zug- oder Schubbewegung kann dadurch erzeugt werden, dass die Gelenkshülse und die Gelenkspfanne gemeinsam einen Dreh- beziehungsweise bajonettähnlichen Verschluss bilden, der jeweils mit den Rasthaken über eine Anlaufschräge die Gelenkshülse an die Gelenkspfanne aneinander drückt beziehungsweise die Gelenkspfanne in eine erste Öffnung der Gelenkshülse hinein zieht.

Eine Weiterbildung des Kugelgelenks sieht vor, dass die Flügel an einem Ende entlang dem Umfang der Gelenkspfanne durchgängig miteinander verbunden sind und ein gemeinsames Bauteil bilden. Dadurch wird erreicht, dass die Gelenkspfanne einteilig ausgeführt ist und folglich die Herstellungs-, Logistik- und Wartungskosten reduziert werden können.

In einem zusätzlichen Aspekt der Erfindung ist es vorteilhaft, wenn die Gelenkspfanne eine abschließende Stirnseite mit einer zentrischen zweiten Öffnung aufweist, wobei die Stirnseite an den die Flügel verbindenden Bereich der Gelenkspfanne angrenzt. Durch die Öffnung ist eine in der Gelenkskugel befindliche eine Montageausnehmung in Form einer Imbus- oder Torx-Öffnung zugänglich und der Montagezapfen kann in zusammengebautem Zustand des Kugelgelenks beispielsweise mittels eines Gewindes, das sich auf dem Gelenkszapfen befindet, in eine fahrzeugseitige Halterung geschraubt werden.

In einem weiteren Aspekt der Erfindung ist es vorgesehen, dass an dem entlang dem Umfang der Gelenkspfanne miteinander verbindenden Bereich der Gelenkspfanne Rasthaken ausgebildet sind, die vorzugsweise eingerichtet sind, ein axiales, gegen die Einbaurichtung des Gelenkszapfens gerichtetes Verrutschen der Gelenkspfanne zu verhindern und/ oder Teil eines bajonettähnlichen Verschlusses beziehungsweise eines Verschlusses mit einer Einrastposition zur Fixierung des Kugelgelenks bilden, wobei der bajonettähnliche Verschluss vorzugsweise gemeinsam mit der Gelenkshülse gebildet ist. Durch das Kugelgelenk mit einem bajonettähnlichen Verschluss, der das Drücken der Flügel gegen die Gelenkskugel zur Fixierung des Kugelgelenks ermöglicht, entstehen weitere Vorteile der Erfindung durch eine einfache Montage und Demontage der einzelnen Bestandteile des Kugelgelenks.

Es ist besonders günstig, wenn die Rasthaken entlang des Umfangs zwischen den Flügeln angeordnet sind und vorzugsweise u-förmig und vorzugsweise elastisch deformierbar ausgebildet sind. Durch die Anordnung von u-förmigen Rasthaken zwischen den Flügeln ist es möglich, während der Herstellung durch ein Spritzgussverfahren das Werkstück einfach zu entformen, das heißt einfach aus der Spritzgussform zu entnehmen. Die u-Form ist besonders geeignet, um die gewünschte Funktion der Rasthaken als Gleitelement auf einer Rampe beziehungsweise Anlaufschräge zu bilden. Wenn die Rasthaken elastisch deformierbar sind, kann die Funktion des Einrastens am Ende der Anlaufschräge einfach realisiert werden und so eine Arretierung der Rasthaken in einer Endstellung erreicht werden. Durch die Elastizität ist ein mehrmaliges Öffnen und Schließen der Arretierung möglich, ohne dass nennenswerte Verschleißerscheinungen auftreten und folglich die Wartung des Kugelgelenks besonders einfach und kostengünstig ist.

Ferner ist es günstig, wenn die in der Ebene gelegene zumindest eine zweite Steuerkontur eingerichtet ist, mit der Gelenkshülse und die Rasthaken der Gelenkspfanne mit der Anlaufschräge eine axiale Anpresskraft in Richtung der gedachten Längsachse der Gelenkspfanne zwischen der Gelenkshülse und der Gelenkspfanne auszuüben. Dadurch kann erreicht werden, dass die Gelenkspfanne fest mit der Gelenkshülse verbunden ist, indem eine axiale Anpresskraft die beiden Teile aneinanderdrückt.

Es ist vorteilhaft, wenn die Gelenkshülse zumindest eine Anlaufschräge umfasst, die längs des Umfangs eines gedachten Kreises angeordnet ist, wobei der gedachte Kreis konzentrisch um die erste Öffnung der Gelenkshülse gelegen ist. Die zuvor genannte Bajonett- und Arretierungsfunktion kann dadurch besonders einfach realisiert werden.

Allgemein wird unter eine Anlaufschräge eine rampenförmige Struktur auf einem Körper verstanden, auf der ein zweiter Körper bei Krafteinwirkung gleiten kann. Durch die Rampe kann durch eine Linear- oder Drehbewegung eine orthogonal zur Linearachse oder in Richtung der Drehachse orientierte Linearbewegung bewirkt werden. Mit anderen Worten ist eine Anlaufschräge eine Form einer Steuerkontur.

Außerdem ist es vorteilhaft, wenn die Rasthaken bei einer axialen Verdrehung der Gelenkspfanne bezüglich der Gelenkshülse auf der Anlaufschräge gleiten und dabei axial eine Zugkraft ausüben, die die Gelenkspfanne in die Gelenkshülse drückt. Folglich kann die zuvor genannte Funktion besonders einfach realisiert werden.

In einem besonders vorteilhaften Aspekt der Erfindung kann das Kugelgelenk an einem oder innerhalb eines Fahrzeugscheinwerfers angeordnet und dazu eingerichtet sein, den Fahrzeugscheinwerfer in einer Einbaulage zu fixieren. Das Kugelgelenk ist insbesondere dafür geeignet, in einem Fahrzeugscheinwerfer Teile zu verbinden und teils hohe Einbautoleranzen zu überwinden und auszugleichen, was derart geschieht, dass das Kugelgelenk erst nach Befestigung der Teile an einem Fahrzeugscheinwerfer fixiert wird.

In einem zusätzlichen Aspekt der Erfindung kann ein Fahrzeugscheinwerfer, insbesondere zur Erzeugung einer Fernlicht- und/ oder einer Abblendlicht-Lichtverteilung, mit zumindest einem Kugelgelenk zum Einbau des Fahrzeugscheinwerfers in einem Kraftfahrzeug versehen sein, wobei das Kugelgelenk eine fahrzeugseitig gelegene Trägereinheit mit dem Fahrzeugscheinwerfer verbindet. Das Kugelgelenk ist insbesondere auch dafür geeignet, einen Fahrzeugscheinwerfer an einer fahrzeugseitigen Halterung zu fixieren, um die teils hohen Einbautoleranzen auszugleichen.

Es ist somit vorteilhaft, wenn der Fahrzeugscheinwerfer ferner eine Dreipunktaufhängung mit drei Beinen zur Befestigung des Lichtmoduls am Fahrzeugscheinwerfer oder des Fahrzeugscheinwerfers an der Trägereinheit eines Fahrzeugs beinhaltet, wobei zumindest ein Bein das Kugelgelenk umfasst. Es ist vorteilhaft, wenn alle drei Beine jeweils ein Kugelgelenk umfassen, um eine Befestigung des Scheinwerfers beziehungsweise des Lichtmoduls frei von Verbiegemomenten, die bei einer Justierung ansonsten auftreten könnten, zu erhalten.

Es ist besonders vorteilhaft, wenn die Gelenkspfanne aus einem Kunststoffmaterial insbesondere durch ein Spritzgussverfahren gefertigt ist, da die Formgebung und Entformung, das heißt die Entnahme aus der Spritzgussform, der Gelenkspfanne besonders geeignet sind.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in
- Fig. 1: eine perspektivische Ansicht vom oben einer ersten Ausführungsform einer Gelenkspfanne,
- Fig. 2: eine perspektivische Ansicht von oben einer Gelenkshülse,
- Fig. 3: eine perspektivische Ansicht von oben der ersten Ausführungsform der Gelenkspfanne nach Fig. 1, die in der Gelenkshülse nach Fig. 2 angeordnet ist,
- Fig. 4: eine perspektivische Ansicht von unten der Gelenkshülse nach Fig. 2,
- Fig. 5: eine perspektivische Ansicht von unten der ersten Ausführungsform der Gelenkspfanne nach Fig. 1, die in der Gelenkshülse nach Fig. 2 angeordnet ist,
- Fig. 6: eine Vorderansicht eines Gelenkszapfens,
- Fig. 7: eine Ansicht des Querschnitts des Gelenkszapfens nach Fig. 6,
- Fig. 8: eine perspektivische Ansicht des Gelenkszapfens nach Fig. 6,
- Fig. 9: eine perspektivische Ansicht des Gelenkszapfens nach Fig. 6, der in der Gelenkspfanne nach Fig. 1 angeordnet ist,
- Fig. 10: eine perspektivische Ansicht von hinten des Gelenkszapfens nach Fig. 6, der in der Gelenkspfanne nach Fig. 1 angeordnet ist, die wiederum in der Gelenkshülse nach Fig. 2 angeordnet ist, in einem nicht fixierten Zustand,
- Fig. 11: einen Ausschnitt eines Querschnitts des Gelenkszapfens nach Fig. 6, der in der Gelenkspfanne nach Fig. 1 angeordnet ist, in einem nicht fixierten Zustand,
- Fig. 12: eine perspektivische Ansicht von hinten des Gelenkszapfens nach Fig. 6, der in der Gelenkspfanne nach Fig. 1 angeordnet ist, die wiederum in der Gelenkshülse nach Fig. 2 angeordnet ist, in einem halb fixierten Zustand,
- Fig. 13: einen Ausschnitt eines Querschnitts des Gelenkszapfens nach Fig. 6, der in der Gelenkspfanne nach Fig. 1 angeordnet ist, in einem halb fixierten Zustand,
- Fig. 14: eine perspektivische Ansicht von hinten des Gelenkszapfens nach Fig. 6, der in der Gelenkspfanne nach Fig. 1 angeordnet ist, die wiederum in der Gelenkshülse nach Fig. 2 angeordnet ist, in einem fixierten Zustand,
- Fig. 15: einen Ausschnitt eines Querschnitts des Gelenkszapfens nach Fig. 6, der in der Gelenkspfanne nach Fig. 1 angeordnet ist, in einem fixierten Zustand,
- Fig. 16: eine Ansicht von oben der Gelenkspfanne nach Fig. 1,
- Fig. 17: eine perspektivische Ansicht von oben der Gelenkshülse,
- Fig. 18: eine perspektivische Ansicht von oben einer zweiten Ausführungsform einer nicht erfindungsgemäßen Gelenkspfanne,
- Fig. 19: eine perspektivische Ansicht von unten der Gelenkshülse,
- Fig. 20: eine perspektivische Ansicht von unten der zweiten Ausführungsform der Gelenkspfanne,
- Fig. 21: eine Ansicht von oben der Gelenkshülse,
- Fig. 22: eine Ansicht von oben der zweiten Ausführungsform der Gelenkspfanne,
- Fig. 23: eine Ansicht von unten der Gelenkshülse,
- Fig. 24: eine Ansicht von unten der zweiten Ausführungsform der Gelenkspfanne,
- Fig. 25: eine Seitenansicht im Schnitt A-A der Gelenkshülse nach der Fig. 21,
- Fig. 26: eine Seitenansicht im Schnitt B-B der Gelenkspfanne nach der Fig. 24,
- Fig. 27: eine Ansicht von oben der zweiten Ausführungsform der Gelenkspfanne, die in der Gelenkshülse in einer ersten Konfiguration angeordnet ist,
- Fig. 28: eine perspektivische Ansicht von oben der zweiten Ausführungsform der Gelenkspfanne, die in der Gelenkshülse in der ersten Konfiguration angeordnet ist,
- Fig. 29: eine Ansicht von unten der zweiten Ausführungsform der Gelenkspfanne, die in der Gelenkshülse in der ersten Konfiguration angeordnet ist,
- Fig. 30: eine Seitenansicht im Schnitt C-C der zweiten Ausführungsform der Gelenkspfanne und der Gelenkshülse nach der Fig. 29,
- Fig. 31: eine Ansicht von unten der zweiten Ausführungsform der Gelenkspfanne, die in der Gelenkshülse in einer zweiten Konfiguration angeordnet ist und in der der Gelenkszapfen eingesetzt wird,
- Fig. 32: eine Seitenansicht im Schnitt D-D der zweiten Ausführungsform der Gelenkspfanne, des Gelenkszapfens und der Gelenkshülse nach der Fig. 31,
- Fig. 33: eine Ansicht von oben der zweiten Ausführungsform der Gelenkspfanne, die in der Gelenkshülse in einer dritten Konfiguration angeordnet ist,
- Fig. 34: eine Ansicht von unten der zweiten Ausführungsform der Gelenkspfanne, die in der Gelenkshülse in der dritten Konfiguration angeordnet ist,
- Fig. 35: eine Seitenansicht im Schnitt E-E der zweiten Ausführungsform der Gelenkspfanne, des Gelenkszapfens und der Gelenkshülse nach der Fig. 34,
- Fig. 36: eine Ansicht von oben der zweiten Ausführungsform der Gelenkspfanne, die in der Gelenkshülse in einer vierten Konfiguration angeordnet ist,
- Fig. 37: eine Ansicht von unten der zweiten Ausführungsform der Gelenkspfanne, die in der Gelenkshülse in der vierten Konfiguration angeordnet ist,
- Fig. 38: eine Seitenansicht im Schnitt F-F der zweiten Ausführungsform der Gelenkspfanne, des Gelenkszapfens und der Gelenkshülse nach der Fig. 37,
- Fig. 39: einen Fahrzeugscheinwerfer mit einem Lichtmodul und einem Kugelgelenk gemäß der vorhergehenden Figuren in einer Ansicht von vorne,
- Fig. 40: das Lichtmodul nach Fig. 39 in einer perspektivischen Ansicht von hinten und mit dem Kugelgelenk in einer Explosionsdarstellung,
- Fig. 41: das Lichtmodul nach Fig. 40, wobei die Gelenkspfanne in die Gelenkshülse eingesetzt ist,
- Fig. 42: das Lichtmodul nach Fig. 41, wobei der Gelenkszapfen in die Gelenkspfanne lose eingesetzt ist,
- Fig. 43: das Lichtmodul nach Fig. 42, wobei die Gelenkspfanne gegenüber der Gelenkshülse verdreht ist,
- Fig. 44: das Lichtmodul nach Fig. 43, wobei die Gelenkspfanne gegenüber der Gelenkshülse in einer Endposition verdreht ist,
- Fig. 45: das Lichtmodul nach Fig. 40, wobei der Gelenkszapfen in die Gelenkspfanne eingesetzt ist,
- Fig. 46: symbolisch ein Fahrzeug mit einem Scheinwerfer nach Fig. 39.

In den folgenden Figuren sind wichtige Elemente eines Fahrzeugscheinwerfers 1 sowie von Kugelgelenken 100 und 200 gezeigt, wobei klar ist, dass nicht alle gezeigten Details für die Erfindung wesentlich sind und nur einer besseren Verständlichkeit der Erfindung dienen. Außerdem stellen manche Figuren die Anordnungen zur Klarheit nur vereinfacht dar und es ist klar, dass zur vollständigen Funktion eines Fahrzeugs bzw. eines Fahrzeugscheinwerfers weitere Komponenten, wie Halterungen, Gehäuseteile, elektrische oder optische Bauelemente, sowie Konstruktionsvorrichtungen mit entsprechenden Befestigungsteilen notwendig sind.

Die beiden Ausführungsformen der Kugelgelenke 100 und 200 unterscheiden sich nur in wenigen Details der gezeigten Gelenkspfannen der beiden Kugelgelenke, sodass viele Details der Beschreibung für beide Ausführungsformen gelten und daher nicht wiederholt werden.

Es ist klar, dass neben den gezeigten Ausführungsformen des Fahrzeugscheinwerfers 1 sowie der Kugelgelenke 100, 200 auch noch weitere Ausführungsformen mit Kombinationen von Merkmalen gemäß der nachfolgenden Ansprüche in deren Schutzbereich fallen. Je nach den Erfordernissen beispielsweise durch unterschiedliche Anwendungen können folglich bei unterschiedlichen Teilen eines Kugelgelenks unterschiedliche Merkmale ausgebildet sein oder eben nicht.

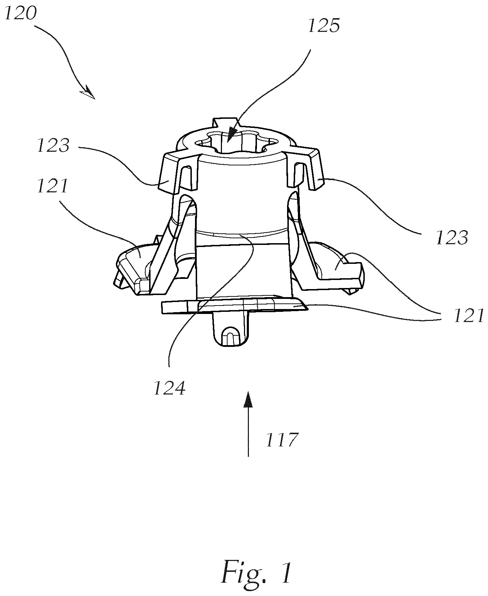

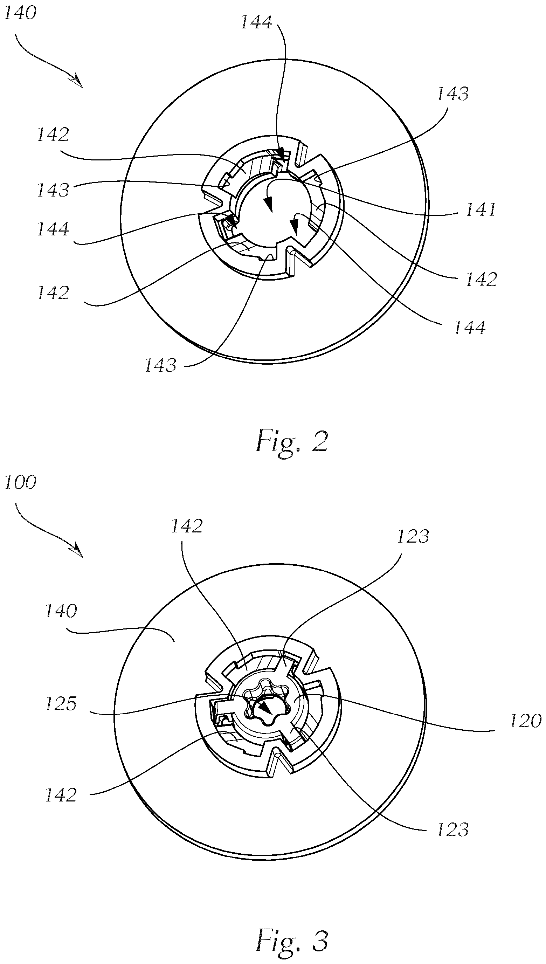

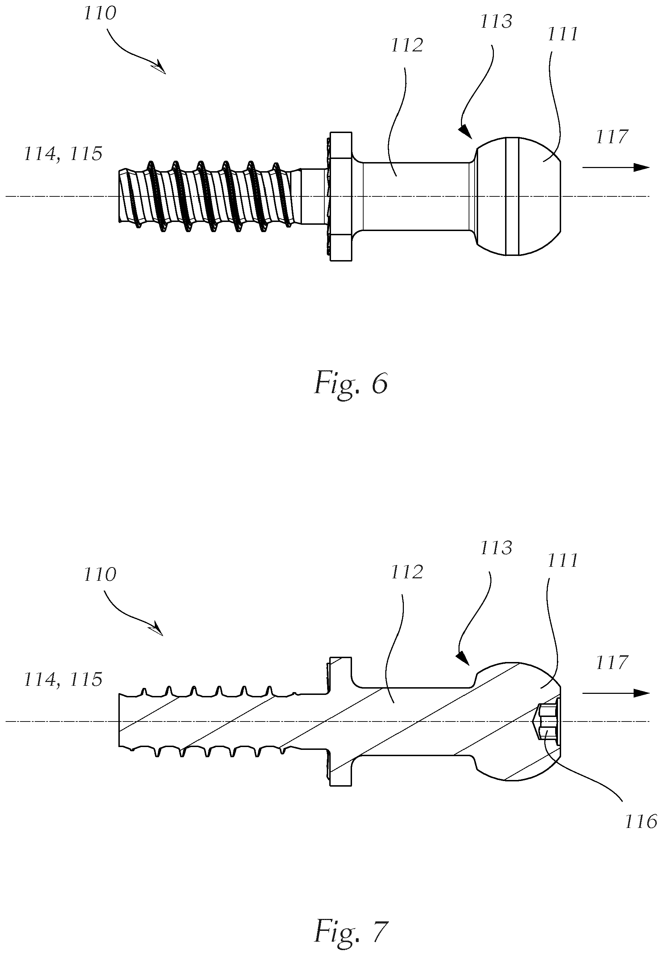

**Fig. 1** zeigt eine Ausführungsform einer Gelenkspfanne 120, **Fig. 2** zeigt eine Gelenkshülse 140 und **Fig. 6** einen Gelenkszapfen 110 für ein Kugelgelenk 100.

In **Fig. 1** ist die Gelenkspfanne 120 gezeigt, die für ein Kugelgelenk 100 (in den folgenden Figuren gezeigt) geeignet ist. Die Gelenkspfanne 120 kann beispielsweise drei Flügel 121 umfassen, die entlang dem Umfang der Gelenkspfanne 120 aufeinander folgend angeordnet sind und im fixierten Zustand des Kugelgelenks 100 auf einer Gelenkskugel 111 des Gelenkszapfens 110 (in Fig. 6 gezeigt) eine innenliegende Gelenksfläche des Kugelgelenks 100 bilden und die Gelenkskugel 111 umschließen, die im fixierten Zustand des Kugelgelenks 100 komplementär zur Oberfläche der Gelenkskugel 111 geformt ist. Die Flügel 121 weisen jeweils ein Filmscharnier 124 auf, um leichter aufdehnbar zu sein und der Gelenkskugel des Kugelgelenks 100 aufnehmen zu können. Das Filmscharnier 124 ist jeweils zwischen den beiden Enden der Flügel 121 entlang dem Umfang verlaufend ausgebildet. Ferner ist die Einbaurichtung 117 eines in Fig. 6 gezeigten Gelenkszapfens 110 dargestellt.

Zur mechanischen Befestigung der Gelenkspfanne 120 beispielsweise in einer Gelenkshülse können mehrere Rasthaken 123 (in diesem Beispiel drei Rasthaken 123) auf der Gelenkspfanne 120 angeordnet sein, um beispielsweise mit einem Gegenstück auf einer Gelenkshülse einen bajonettähnlichen Verschluss beziehungsweise einen Verschluss mit einer Einrastposition zu bilden, was einen sehr einfachen Zusammenbau des Kugelgelenks 100 ermöglicht. Diesen Zusammenbau kann eine zweite Öffnung 125 unterstützen, die eine Form eines Schraubenziehers, beispielsweise in Form eines Innensechskant (Imbus), Torx oder Kreuzschlitzes aufweist, um ein einfaches Verdrehen durch einen entsprechenden Schraubenzieher zu ermöglichen. Die Einbaurichtung 117 einer Gelenkskugel in eine Gelenkspfanne ist in der Figur ersichtlich.

Im gezeigten Beispiel sind die Flügel 121 an einem Ende entlang dem Umfang der Gelenkspfanne 120 durchgängig miteinander verbunden und bilden ein gemeinsames Bauteil.

Die Gelenkspfanne 120 weist eine abschließende Stirnseite mit einer zentrischen zweiten Öffnung 125 auf, wobei die Stirnseite an den die Flügel 121 verbindenden Bereich der Gelenkspfanne 120 angrenzt.

Ferner sind an dem miteinander verbindenden Bereich der Gelenkspfanne 120 die Rasthaken 123 ausgebildet, um ein axiales, gegen die Einbaurichtung 117 eines Gelenkszapfens, der eine Gelenkskugel für das Kugelgelenk 100 umfasst, gerichtetes Verrutschen der Gelenkspfanne 120 verhindern zu können. Zusätzlich können die Rasthaken 123 Teil eines bajonettähnlichen Verschlusses zur Arretierung sowie zur Fixierung des Kugelgelenks bilden. Der bajonettähnliche Verschluss ist dabei gemeinsam mit einer Gelenkshülse gebildet.

Die Rasthaken 123 sind entlang des Umfangs zwischen den Flügeln 121 angeordnet und vorzugsweise u-förmig und elastisch deformierbar ausgebildet.

Die Flügel 121 weisen zwischen deren beiden Enden einen verjüngenden Querschnitt in radialer Richtung auf. Außerdem können die Flügel 121 im fixierten Zustand des Kugelgelenks 100 durch die in Fig. 2 gezeigte Gelenkshülse 140 jeweils in Bereichen neben dem in radialer Richtung verjüngten Querschnitt an die Gelenkskugel gedrückt werden, wie gezeigt jeweils durch eine Steuerkontur und eine Steuerfläche.

Ferner erstrecken sich die Flügel 121 in einem unverstellten Zustand, in dem eine gedachte Längsachse 114 des Gelenkszapfens 110 mit einer gedachten Längsachse 122 der Gelenkspfanne 120 übereinstimmt, zumindest bis zur Gelenkskante 113.

Die Flügel 121 der Gelenkspfanne 120 verlaufen in ihrer axialen Länge über die Gelenkskante 113 hinaus und dabei werden die radialen Abstände der innenliegenden Seite der Flügel 121 zur gedachten Achse 115 des Gelenkschafts 112 zumindest nicht geringer.

Zusätzlich ist in diesem Beispiel gezeigt, dass im nicht fixierten Zustand zwischen den Flügeln 121 jeweils ein axial verlaufender Spalt ausgebildet sein kann.

Außerdem kann die Gelenkspfanne 120 im Bereich ihrer Flügel 121 in deren Außenkontur durch die Form eines Kegelstumpfs begrenzt sein, wobei der Kegelstumpf von den offenen Enden der Flügel 121 hin zu dem die Flügel 121 verbindenden Bereich der Gelenkspfanne 120 im Außenradius abnimmt. Diese Ausgestaltung erlaubt ein Zusammenwirken mit einer Gelenkshülse, sodass die Flügel durch dieses Zusammenwirken radial zusammengedrückt werden können.

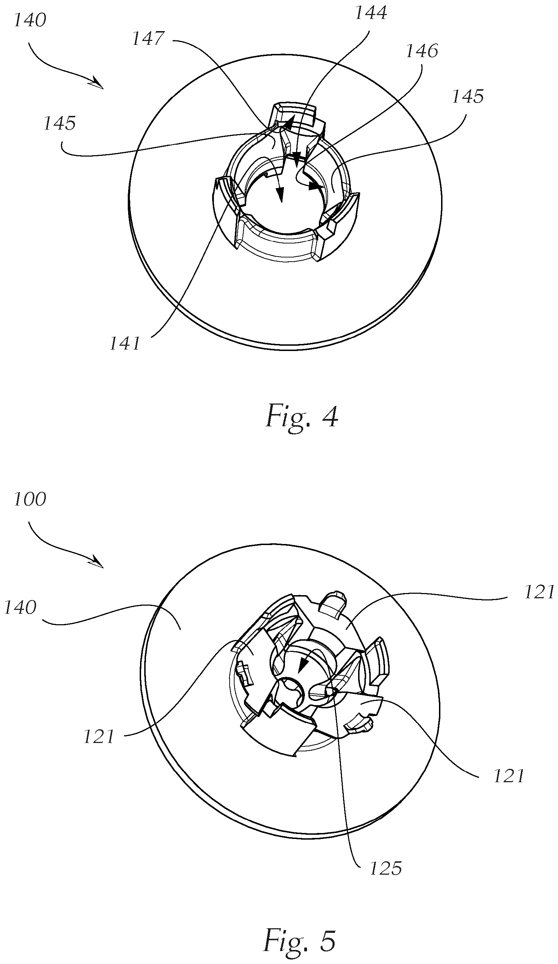

**Fig. 2** und **Fig. 4** zeigen eine Gelenkshülse 140, in der eine Aufnahme für die Gelenkspfanne 120 vorgesehen ist. Die Gelenkshülse 140 umschließt zumindest die Flügel 121 der Gelenkspfanne 6. Außerdem kann die Gelenkshülse 140 eine Aufnahme 143 für die Rasthaken 123 aufweisen, Anlaufschrägen 142 sowie dritte Öffnungen 144 zum Durchstecken der Rasthaken 123. Die Anlaufschrägen 142 dienen dazu, durch die Rasthaken 123 die Gelenkspfanne 120 mit der Gelenkshülse 140 durch eine Drehbewegung festzuspannen, wodurch Pfannenaufnahmen 145 radial komprimiert werden können und die Flügel 121 zusammenpressen können beziehungsweise bei einer in das Kugelgelenk 100 eingesetzter Gelenkskugel die Flügel 121 an die Gelenkskugel drücken können und so eine Fixierung des Kugelgelenks 100 erreichen, wobei dieser Aspekt im vorliegenden Ausführungsbeispiel nicht ausgeführt ist.

Die Anlaufschräge 142 ist längs des Umfangs eines gedachten Kreises angeordnet, wobei der gedachte Kreis konzentrisch um die erste Öffnung 141 der Gelenkshülse 140 gelegen ist.

Die Rasthaken 123 gleiten bei einer axialen Verdrehung der Gelenkspfanne 120 bezüglich der Gelenkshülse 140 auf der Anlaufschräge 142 und üben dabei axial eine Zugkraft aus, die die Gelenkspfanne 120 in die Gelenkshülse 140 drückt.

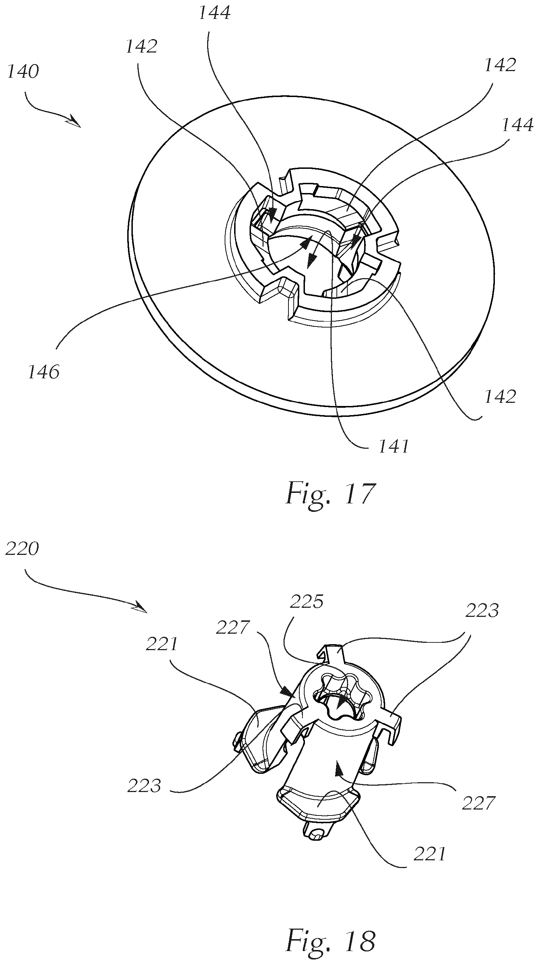

In **Fig. 3** und **Fig. 5** ist jeweils neben der Gelenkshülse 140 des Kugelgelenks 100 (hier ohne eine Gelenkskugel) die Gelenkspfanne 120 angeordnet. Es ist erkennbar, dass die in die Gelenkshülse 140 eingesetzte Gelenkspfanne 120 mit den Rasthaken 123 den bajonettähnlichen Verschluss bildet, was einen besonders einfachen Zusammenbau des Kugelgelenks 100 ermöglicht. Der bajonettähnliche Verschluss sorgt durch eine Drehbewegung dafür, dass die Rasthaken 123 der Gelenkspfanne 120 entlang von Auflaufschrägen 142 mit der Gelenkshülse 140 verpresst werden und die resultierende Verbindung einen stabilen Halt aufweist, die sogar bei Vibrationen, wie sie im Einsatz eines Fahrzeugscheinwerfers häufig vorkommen, robust ist. Eine jeweilige Einrastposition 143 der Rasthaken 123 am Ende der Anlaufschrägen 142 verstärkt diese günstige Eigenschaft und wird im Zuge der folgenden weiteren Beschreibung der Figuren 17 bis 38 im Detail erläutert. Die Drehbewegung kann durch einen Schraubenzieher, der in die Öffnung eingesetzt wird, ausgeübt werden.

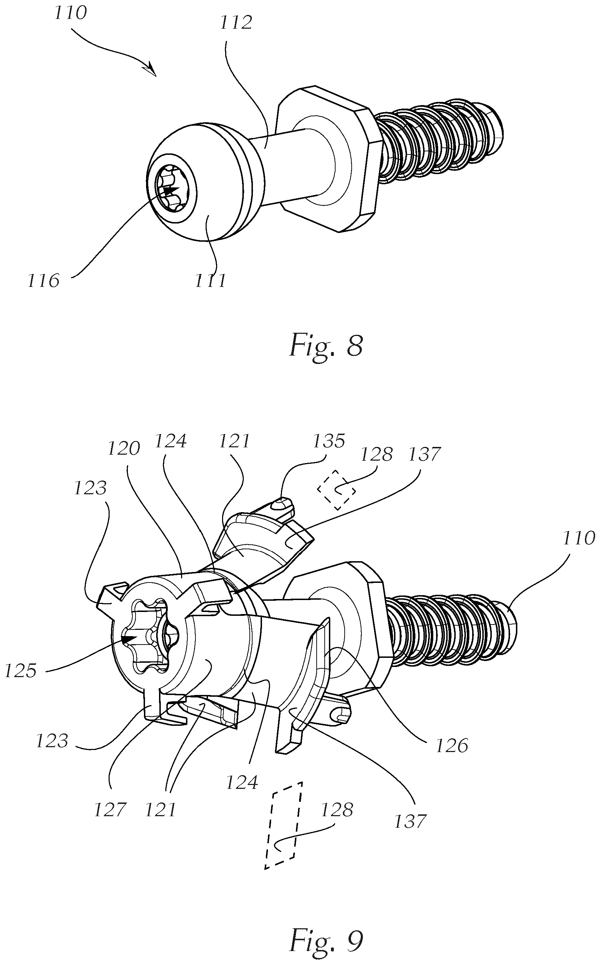

**Fig. 6, Fig. 7** und **Fig. 8** zeigen einen Gelenkszapfen 110 zur Bildung des Kugelgelenks 100. Der Gelenkszapfen 110 umfasst eine Gelenkskugel 111, die auf einer Seite in eine Stirnseite eines im Wesentlichen zylindrisch geformten Gelenkschafts 112 übergeht. Die Form des Gelenkschafts 112 hängt letztendlich von der Anwendung ab, welche Funktion das Kugelgelenk ausüben soll. Häufig werden flexible Befestigungen durch ein derartiges Kugelgelenk geschaffen, sodass eine Befestigung des Gelenkschafts 112 beispielsweise an einem Tragrahmen eines Fahrzeugscheinwerfers erfolgen kann. Dafür kann es günstig sein, wenn der Gelenkschaft 112 ein Außengewinde aufweist, sodass der Gelenkschaft 112 mit dem Tragrahmen verschraubt werden kann. Alternativ kann eine außenliegende Sechskantform gewünscht sein, um beispielsweise eine Steckverbindung zu realisieren. Auf der Außenkontur können Erhebungen angebracht sein, um den Gelenkszapfen 110 während der Montage einfach greifen zu können oder mit einem Werkzeug festschrauben zu können, wie in der Figur 8 in einer axial schmalen Sektion des Gelenkszapfens 110 durch einen annähernd quadratischen Querschnitt der Kontur dargestellt.

Auf der Oberfläche des Gelenkszapfens 110 zwischen dem Gelenkschaft 112 und der Gelenkskugel 111 kann eine entlang dem Umfang der Gelenkspfanne 120 verlaufende Gelenkskante 113 ausgebildet sein.

Zusätzlich weist der Gelenkszapfen 110 eine Montageausnehmung 116 auf, die beispielsweise zur Aufnahme eines Schraubenziehers geformt ist und dadurch eine Drehbewegung zur Verschraubung des Gelenkszapfens 110 in einem Tragrahmen oder zur Fixierung in einem bajonettähnlichen Verschluss erlaubt.

Grundsätzlich ist es möglich, dass die Gelenkskugel 111 nicht in einer gedachten Verlängerung der gedachten Längsachse des Gelenkszapfens 114 befindet. Diese Variante kann für sehr spezielle Konstruktionen günstig sein. Häufig wird aber von einer einfacheren Gestalt des Gelenkszapfens 110 ausgegangen, in der die gedachte Längsachse des Gelenkszapfens 114 mit der gedachten Längsachse 115 des Gelenkschafts 112 übereinstimmt, wie in gezeigten Beispiel veranschaulicht. Der geometrische Mittelpunkt der Gelenkskugel 111 ist dabei auf einer Verlängerung einer gedachten Längsachse 115 des Gelenkschafts 112 gelegen. Ferner kann die Gelenkskugel 111 auf der Seite, die dem Gelenkschaft 112 abgewandt ist, abgeflacht sein und die Montageausnehmung 116 aufweisen.

Im gezeigten Beispiel ist der Durchmesser der Gelenkskugel 111 größer als der radiale Durchmesser des Gelenkschafts 112 und ein Übergang zwischen Gelenkschaft 112 und Gelenkskugel 111 ist durch eine entlang dem Umfang der Gelenkspfanne 120 verlaufende konkave Fläche gebildet. Dabei ist die Gelenkskante 113 durch eine Schnittkurve der im Wesentlichen konvexen Oberfläche der Gelenkskugel 111 und der konkaven Fläche des Übergangs vom Gelenkschaft 112 zur Gelenkskugel 111 ausgebildet.

In **Fig. 9** ist der Gelenkszapfen 110 gezeigt, der in der Gelenkspfanne 120 zur Bildung des Kugelgelenks 100 angeordnet ist. Es ist die zweite Öffnung 125 erkennbar, durch die Zugang zur Montageausnehmung 116 möglich ist.

Es ist ebenso erkennbar, dass die Gelenkspfanne 120 drei Flügel 121 aufweist, die durch jeweilige Filmscharniere 124 an den Flügeln 121 leicht nach außen dehnbar sind, um den Gelenkszapfen 110 mit seiner Gelenkskugel 111 aufzunehmen. Ferner ist eine Ebene 128 der Gelenkspfanne 120 erkennbar, die in zusammengebautem Zustand des Kugelgelenks 100 quer zur der in Fig. 1 erkennbaren Einbaurichtung 117 gelegen ist, und in der Steuerkonturen 126 gelegen sein können, die mit in Fig. 4 gezeigten Steuerflächen 147 auf der Gelenkshülse 140 wechselwirken können.

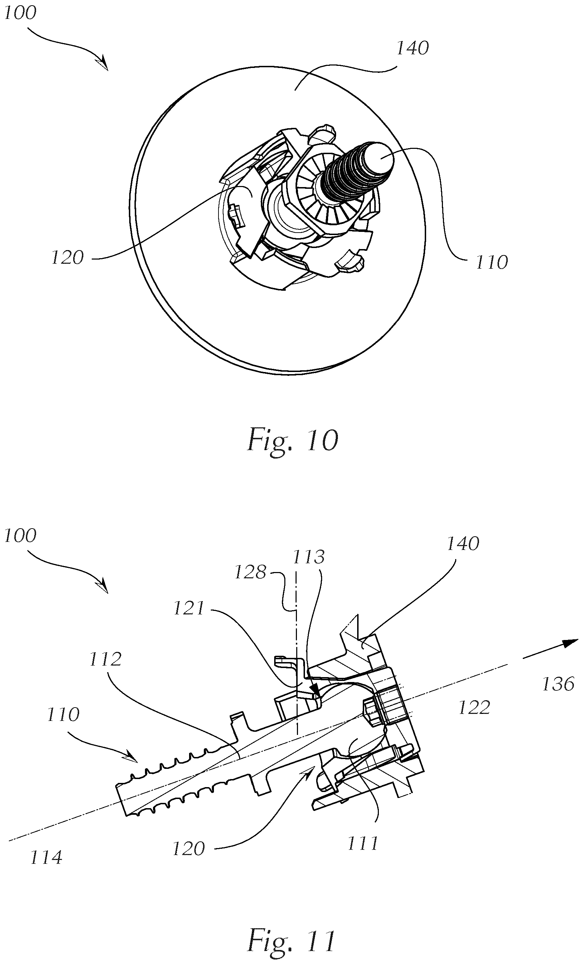

**Fig. 10** zeigt eine Anordnung bestehend aus dem Gelenkszapfen 110 und der Gelenkspfanne 120, der in der Gelenkshülse 140 gelegen ist, in einem nicht fixierten Zustand des gebildeten Kugelgelenks 100. In diesem Beispiel wird das Kugelgelenk 100 erst durch Verdrehen der Gelenkspfanne 120 in der Gelenkshülse 140 fixiert, indem ein bajonettähnlicher Verschluss die beiden Komponenten aneinander drückt und einrastet. Der bajonettähnliche Verschluss ist durch die Rasthaken 123 und die entsprechende Formgebung der Gelenkshülse 140 gebildet, wobei jeweils die in Fig. 2 gezeigte Anlaufschräge 142 seitens der Gelenkshülse 140 dazu dient, die beiden Komponenten aneinander zu drücken oder die Gelenkspfanne 120 axial festzustellen.

Das Kugelgelenk 100 umfasst eine Steuerkontur, die eingerichtet ist, durch eine Drehbewegung zwischen der Gelenkspfanne 120 und der Gelenkshülse 140 durch die Flügel 121 der Gelenkspfanne 120 eine radiale Anpresskraft auf die Gelenkskugel 111 auszuüben, wobei das Kugelgelenk 100 dadurch fixiert werden kann.

Die Steuerkontur ist durch eine erste Steuerkontur 146 gebildet, die an der Gelenkshülse 140 gelegen ist, insbesondere in einem Bereich der innenliegenden Oberfläche beziehungsweise der ersten Öffnung 141 der Gelenkshülse 140, wobei die in Fig. 4 dargestellte erste Steuerkontur 146 in diesem Ausführungsbeispiel nur die Flügel 121 radial zusammendrückt und keine radial wirkende Anpresskraft auf die Gelenkskugel 111 ausübt. Dieser Aspekt der Kraftübertragung kann in einem anderen Ausführungsbeispiel so ausgestaltet sein, dass zusätzlich eine mittelbare Anpresskraft von der Gelenkshülse 140 durch die Flügel 121 auf die Gelenkskugel 111 ausgeübt wird.

Fig. 11 zeigt einen Ausschnitt des Kugelgelenks 100 im Querschnitt, der durch die Achse des Gelenkszapfens 110 verläuft. Es ist erkennbar, dass die Flügel 121 der Gelenkspfanne 120 weit geöffnet sind, um die Gelenkskugel 111 aufzunehmen. Es ist günstig für die Flexibilität beziehungsweise Biegsamkeit der Flügel, insbesondere für den Zusammenbau des Kugelgelenks beim Einbringen der Gelenkskugel 111 in die Gelenkspfanne 120, wenn die Flügel 121 zwischen deren beiden Enden einen verjüngenden Querschnitt in radialer Richtung aufweisen.

Die Flügel 121 werden dann im fixierten Zustand des Kugelgelenks 100 durch die Gelenkshülse 140 jeweils in Bereichen neben dem in radialer Richtung verjüngten Querschnitt an die Gelenkskugel gedrückt. Im vorliegenden Beispiel erfolgt die Krafteinwirkung durch Steuerkonturen und Steuerflächen, wie im Weiteren genauer beschrieben.

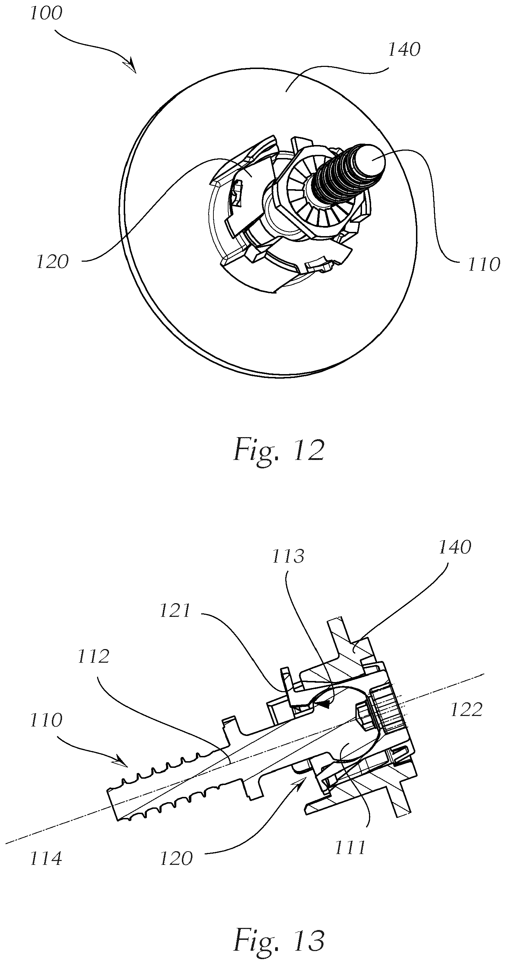

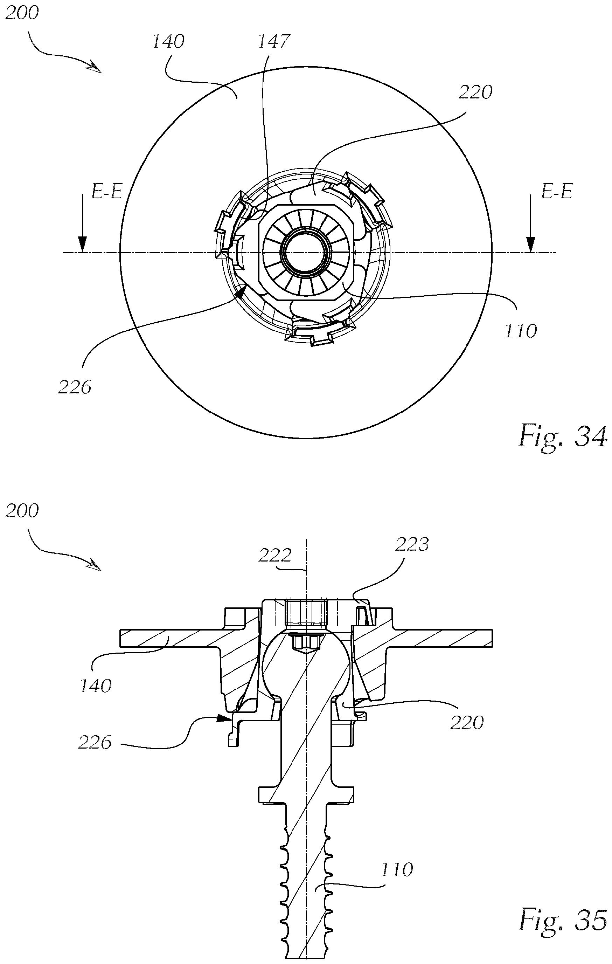

**Fig. 12** und **Fig. 13** zeigen die vorhergehende Anordnung in einem halb fixierten Zustand des Kugelgelenks 100. Dieser halb fixierte Zustand wird erreicht, indem der bajonettähnliche Verschluss leicht verdreht wird (etwa die Hälfte des gesamten Verdrehbereichs des bajonettähnlichen Verschlusses) und die Gelenkshülse 140 durch den konischen Verlauf der Außenkontur der Gelenkspfanne 120 und das entsprechende Gegenstück auf der Gelenkshülse 140 an die Gelenkspfanne 120 gedrückt wird, beziehungsweise die Flügel 121 an die Gelenkskugel 111 gedrückt werden. Zum Schließen der Flügel 121 kann es dienlich sein, wenn sich die zweite Steuerkontur 126 mit dem Gegenelement, das durch die zweite Steuerfläche 147 gebildet ist, an der Gelenkshülse 140 in Eingriff befindet. Dies ist in Fig. 12 dargestellt und wird in der Figurenbeschreibung zu Fig. 34 und 35 genauer ausgeführt.

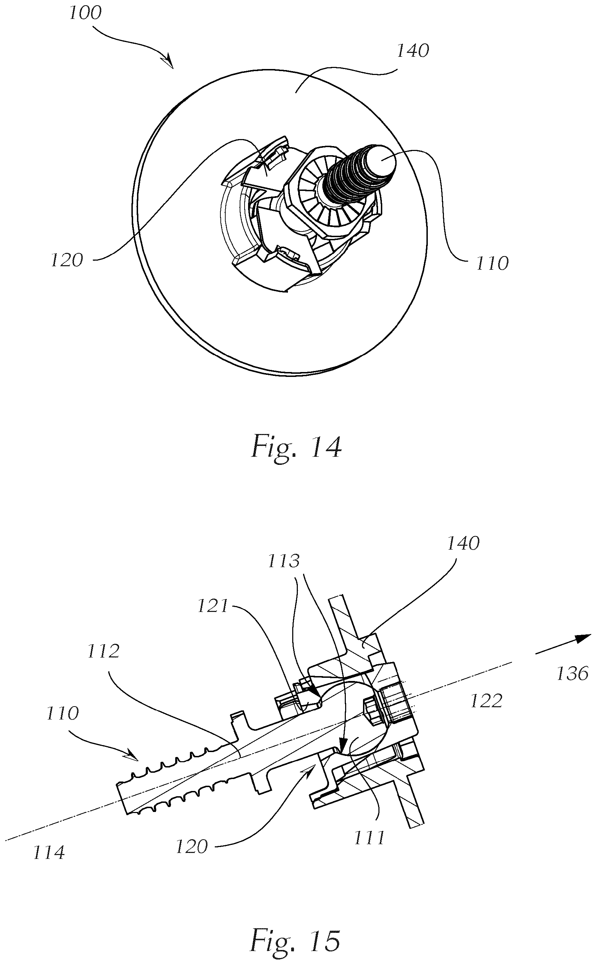

**Fig. 14** und **Fig. 15** zeigen die vorhergehende Anordnung in einem voll fixierten Zustand des Kugelgelenks 100. Dieser voll fixierte Zustand wird erreicht, indem der bajonettähnliche Verschluss weiter verdreht und eingerastet wird und die Gelenkshülse 140 weiter an die Gelenkspfanne 120 gedrückt wird und dadurch die Flügel 121 fest an die Gelenkskugel 111 gedrückt werden. Es ist erkennbar, dass die Flügel 121 eine innenliegende Gelenksfläche des Kugelgelenks 100 bilden, die im fixierten Zustand des Kugelgelenks 100 komplementär zur Oberfläche der Gelenkskugel 111 geformt ist.

Im fixierten Zustand des Kugelgelenks 100 umschließen die Flügel 121 die Gelenkskugel 111. Ferner erstrecken sich die Flügel 121 in einem unverstellten Zustand, in dem eine gedachte Längsachse des Gelenkszapfens 114 mit einer gedachten Längsachse der Gelenkspfanne 122 übereinstimmt, zumindest bis zur Gelenkskante 113, wodurch eine mechanisch besonders feste Fixierung der Kugelgelenks 100 erzielt wird.

Das gezeigte Beispiel für das Kugelgelenk 100 kann an einem oder innerhalb eines Fahrzeugscheinwerfers angeordnet sein und dazu eingerichtet sein, den Fahrzeugscheinwerfer in einer Einbaulage zu fixieren. Das Kugelgelenk 100 kann dabei eine fahrzeugseitig gelegene Trägereinheit mit dem Fahrzeugscheinwerfer verbinden.

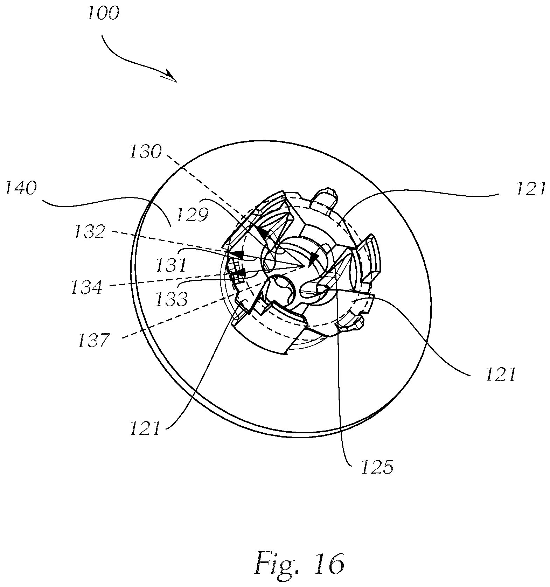

**Fig. 16** zeigt die Gelenkspfanne 120, in der die Flügel 121, die zweiten Steuerkonturen 126 und die Rasthaken 123 erkennbar sind. Ferner ist ein erster Radius 129 in einem ersten Drehwinkel 130, ein zweiter Radius 131 in einem zweiten Drehwinkel 132 und ein dritter Radius 133 in einem dritten Drehwinkel 134 erkennbar. Die Radien 129, 131, 133 sowie die Drehwinkel 130,132,134 sind an jedem der drei Flügel 121 vorliegend, wobei sie jeweils in einem Winkel von 120° voneinander um die Längsachse 122 der Gelenkspfanne verdreht gelegen sind. Ferner ist ein Endanschlag 137, in dem ein Kugelgelenk fixierbar ist, gezeigt.

**Fig. 17** bis **Fig. 38** zeigen eine weitere Ausführungsform eines Kugelgelenks 200 mit deren Komponenten, um den Mechanismus für den Verschluss beziehungsweise das Fixieren des Kugelgelenks 200 sowie des bajonettähnlichen Verschlusses darzustellen. Das Kugelgelenk 200 unterscheidet sich von der vorher gezeigten Ausführungsform des Kugelgelenks 100 nur in Details der Gelenkspfanne 120. Die weiteren Komponenten 110, 140 des Kugelgelenks 200 sind baugleich.

In **Fig. 17** ist eine Gelenkshülse 140 mit einer ersten Öffnung 141 gezeigt, in die eine Gelenkspfanne 220 gemäß **Fig. 18** und ein Gelenkszapfen 110 eingeführt werden kann. Die erste Öffnung 141 der Gelenkshülse ist rund ausgeführt und weist an drei äquidistanten Stellen längs des Umfangs der ersten Öffnung 141 dritte Öffnungen 144 für Rasthaken 223 auf, zwischen denen kreisbogenförmige Führungen längs des Umfangs der ersten Öffnung 141 gelegen sind und einen Teil von Steuerkanten bilden können. Durch die drei dritten Öffnungen 144 für drei Rasthaken 223 kann die Gelenkspfanne 220 mit den drei Rasthaken 223 durchgesteckt werden.

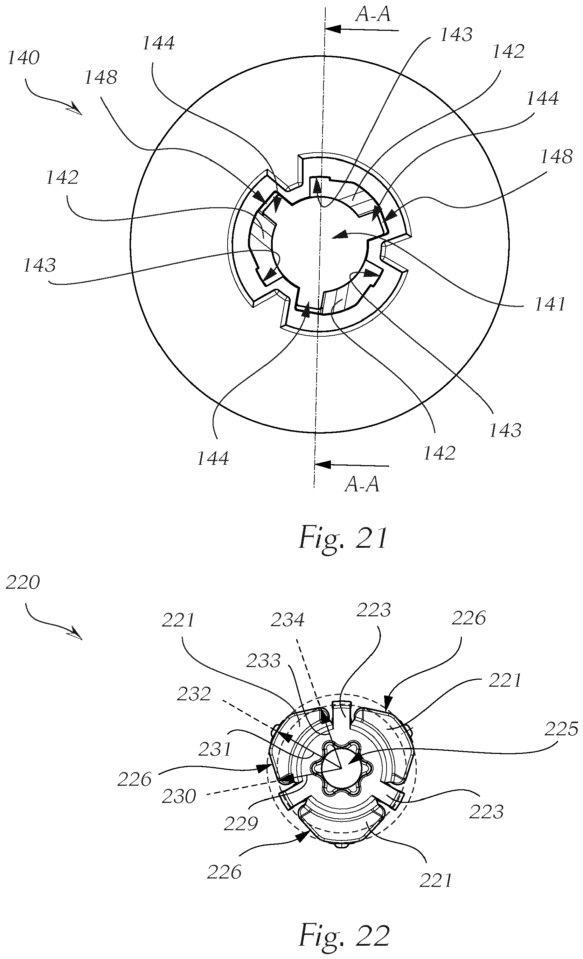

Entlang des Umfangs der ersten Öffnung 141 in der Gelenkshülse 140 sind längs des Umfangs, beginnend bei den dritten Öffnungen 144 für die Rasthaken 223 jeweils Anlaufschrägen 142 vorgesehen, die eingerichtet sind, dass die drei Rasthaken 223 bei Verdrehung der Gelenkspfanne 220 gegenüber der Gelenkshülse 140 auf der jeweiligen Anlaufschräge 142 gleiten und in einer Endstellung einrasten, indem die Anlaufschrägen 142 Enden aufweisen, die jeweils stufige, radiale Ausweitungen 143 umfassen, in die die Rasthaken 223 radial einrasten können, wie nachfolgend detailliert in Fig. 21 gezeigt. Folglich weisen die Anlaufschrägen 142 jeweils eine radiale Breite auf, die die Rasthaken 223 radial zusammendrücken und die Rasthaken 223 erst in den genannten Ausweitungen einrasten und arretieren. Zu diesem Zweck sind die Rasthaken 223 u-förmig ausgeführt, um radial federnd die Einrastfunktion zu ermöglichen. Die Außenflächen der Gelenkspfanne 220 beziehungsweise von Flügeln 221 bilden erste Steuerflächen 227, die mit ersten Steuerkonturen 146, die im Folgenden dargestellt sind, wechselwirken können.

Allgemein wird unter eine Anlaufschräge eine rampenförmige Struktur oder Fläche auf einem Körper verstanden, auf der ein zweiter Körper bei Krafteinwirkung gleiten kann. Durch die Rampe kann durch eine Linear- oder Drehbewegung eine orthogonal zur Linearachse oder in Richtung der Drehachse orientierte Linearbewegung bewirkt werden. Mit anderen Worten ist eine Anlaufschräge eine Form einer Steuerkontur.

Unter Steuerkonturen werden grundsätzlich geometrische Erhebungen aus einer räumlichen Fläche oder beispielsweise auch begrenzende Kanten auf einem ersten Körper verstanden, die dazu dienen, mit zugeordneten Flächen auf einem zweiten Körper, die hier als Steuerflächen bezeichnet werden, oder anderen Steuerkonturen wechselzuwirken. Dabei können Steuerkonturen als Kanten, beispielsweise mit dreieck- oder rechteckförmigem Querschnitt, oder Rundungen ausgebildet sein, die einen geraden oder räumlich gekrümmten Verlauf aufweisen. Die Steuerkonturen können auf einem Teil einer Oberfläche eines Körpers oder auch längs des Umfangs des Körpers oder auch einem Verlauf folgen, der dem Umfang mehrmals folgt, beispielsweise in Form eines Gewindes, in der zwei Steuerkonturen miteinander wechselwirken können.

Steuerkonturen dienen allgemein gemeinsam mit zugeordneten Steuerflächen dazu, eine definierte relative Bewegung zwischen dem ersten und zweiten Körper zu gewährleisten, indem die Steuerkonturen über die Steuerflächen gleiten. Beim vorliegenden Kugelgelenk 200 erfolgt eine Drehbewegung zwischen der Gelenkshülse 140, auf der erste Steuerkonturen 146 gelegen sind, und der Gelenkspfanne 6, auf der erste Steuerflächen 227 gelegen sind, sowie wie später dargestellt zwischen zweiten Steuerkonturen 226 und zweiten Steuerflächen 147. Die Drehbewegung wird auch im bajonettähnlichen Verschluss genützt.

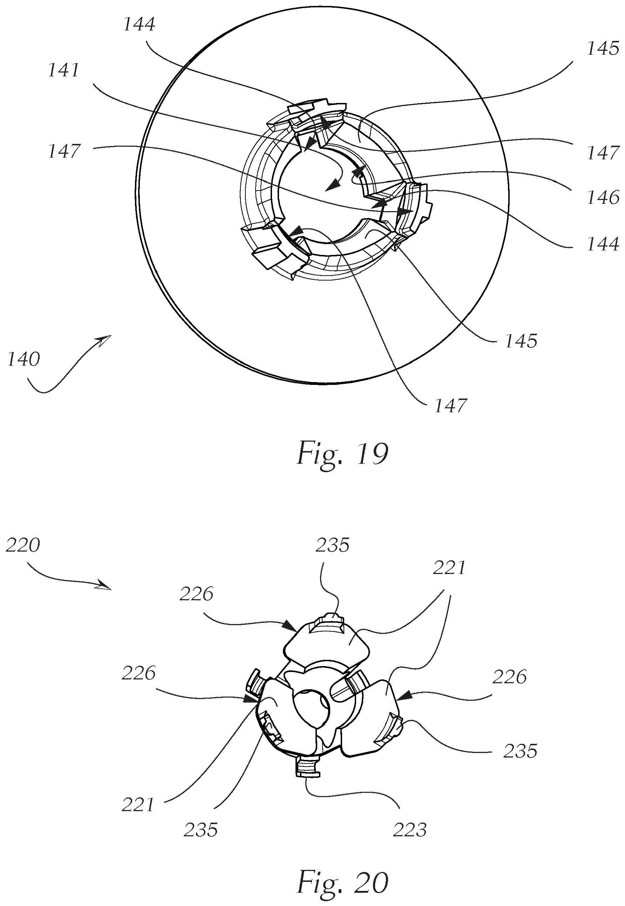

Eine Steuerkontur ist durch drei zweite Steuerkonturen 226 gebildet, die der Gelenkspfanne 220 gelegen sind, hier beispielsweise in einem Bereich der außenliegenden Oberfläche der in Fig. 19 gezeigten Gelenkspfanne 220 und insbesondere auf der außenliegenden Oberfläche der Flügel 221.

Die zweiten Steuerkonturen 226 sind an einem Ende der Flügel 221 gelegen. Besonders günstig ist dabei ein Bereich, dessen Länge 10% der Länge der Flügel 221 beträgt.

Das Kugelgelenk 200 weist Steuerflächen 227, 147 auf, die eingerichtet sind, mit Steuerkonturen 146, 226 zusammenzuwirken und die Steuerkonturen 146, 226 an die Steuerflächen 227,147 zu drücken. Ferner kann ein axiales Verrutschen zwischen der Gelenkspfanne 220 und der Gelenkshülse 140 gegen die Einbaurichtung 117 verhindert werden.

Die Gelenkspfanne 220 des Kugelgelenks 200 unterscheidet sich von der Gelenkspfanne 120 des Kugelgelenks 100 dadurch, dass die zweiten Steuerkonturen 226 anders geformt sind als die Steuerkonturen 126. Die übrigen Komponenten der Gelenkspfanne 220 entsprechen im zweiten Ausführungsbeispiel jenen der Gelenkspfanne 120.

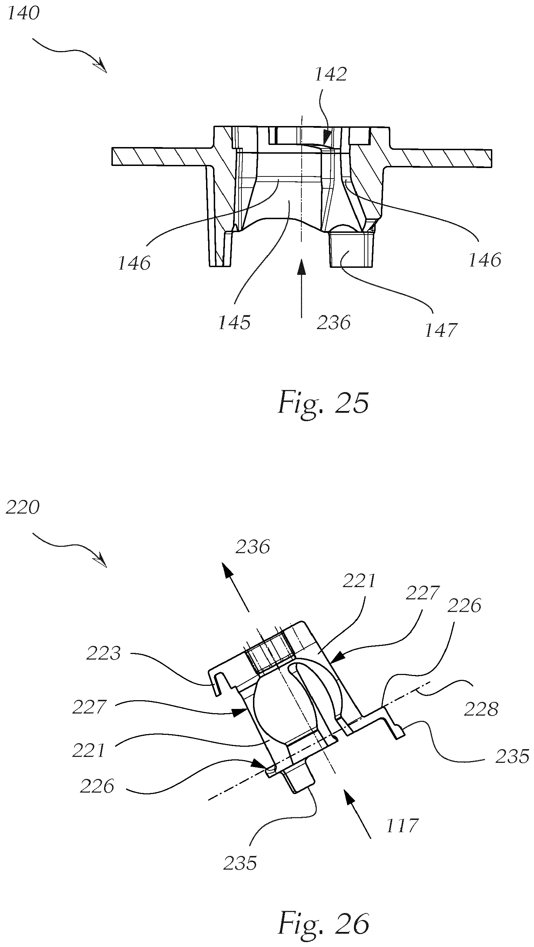

Die zweiten Steuerkonturen 226 sind in zusammengebautem Zustand des in Fig. 26 dargestellten Kugelgelenks 200 in einer Ebene 228 quer zur Einbaurichtung 117 gelegen und deren radialer Abstand geht von einem ersten Radius 229 in einem ersten Drehwinkel 230 um die gedachte Längsachse 222 der Gelenkpfanne zu einem zweiten Radius 231 in einem zweiten Drehwinkel 232 um die gedachte Längsachse 222 der Gelenkpfanne über, wie in Fig. 22 ersichtlich. Der erste Radius 229 ist kleiner als der zweite Radius 231. Die zweiten Steuerkonturen 226 gehen weiter zu einem dritten Radius 233 in einem dritten Drehwinkel 234 um die gedachte Längsachse 222 der Gelenkpfanne über. Der dritte Radius 233 entspricht hier dem ersten Radius 229.

Der Unterschied zwischen dem ersten Radius 229 und dem zweiten Radius 231 kann beispielsweise in der Größenordnung des Radius der Gelenkskugel 111 liegen.

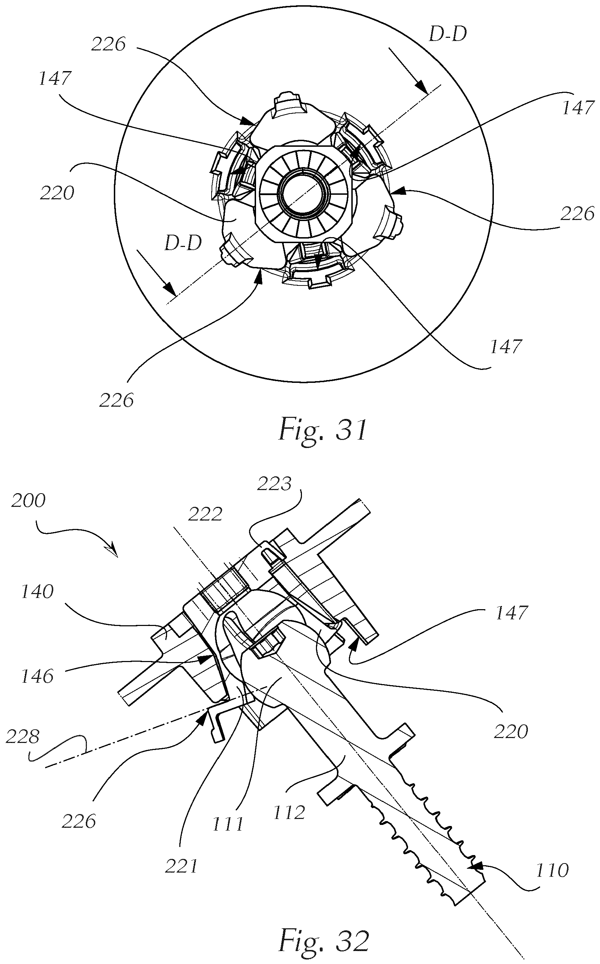

Vorteilhaft ist, wie in Fig. 31 und 32 erkennbar, die weite Öffnung der Flügel 221 in einer ersten Winkelstellung im ersten Drehwinkel 230, die in der Fertigung als Spritzgussteil beispielsweise dem werkzeugfallenden Zustand der Gelenkspfanne 120 entsprechen kann. Dies erleichtert sowohl die Montage wegen des verringerten Kraftaufwands beim Einsetzen der Gelenkskugel 111 in die Gelenkspfanne 220, als auch bei der Herstellung der Gelenkspfanne 220 selbst durch die leichtere Entformbarkeit aus dem Werkzeug, das heißt die Entnahme des Werkstücks aus der Gussform.

Im ersten Ausführungsbeispiel des Kugelgelenks 100 mit der Gelenkspfanne 120 entspricht der dritte Radius 133 dem zweiten Radius 131 und in der Winkelstellung 137 folgt ein Anschlag, in dem die Rasthaken 223 dien jeweiligen Enden der Anlaufschrägen 142 erreicht haben und an der Gelenkshülse 140 kontaktieren können, sowie sich die Rasthaken 223 in den Aufweitungen 143 radial entspannen und dort einrasten können. In dieser Ausführungsform kann die Gelenkspfanne 220 in beide Drehrichtungen in die Gelenkshülse 140, die über Führungen für die Rasthaken 223 mit einem entsprechenden Drehsinn verfügt, gedreht werden, während in der ersten Ausführungsform der Gelenkspfanne 120 nur in einer Drehrichtung in die Gelenkshülse 140 gedreht werden kann. Das in den Fig. 17 und 21 gezeigte Ausführungsbeispiel zeigt Führungen zur axialen Drehung der Gelenkspfanne 220 entgegen dem Uhrzeigersinn.

Für beide Gelenkspfannen 120, 220 entspricht der erste Drehwinkel 130, 230 gegenüber dem zweiten Drehwinkel 132, 232 demselben Betrag, wie der zweite Drehwinkel 132, 232 gegenüber dem dritten Drehwinkel 134, 234. Ferner weisen in der Position des zweiten Drehwinkels 132, 232 die zweiten Steuerkonturen 126, 226 Laschen 135, 235 auf, die sich axial und in einem radialen Abstand des zweiten Radius 131, 231 erstrecken und eingerichtet sind, durch Wechselwirkung mit der zweiten Steuerfläche 147 in einer Verriegelungsstellung der Figuren 14, 15 sowie 37, 38 eine radiale Anpresskraft auf die Gelenkskugel 111 auszuüben.

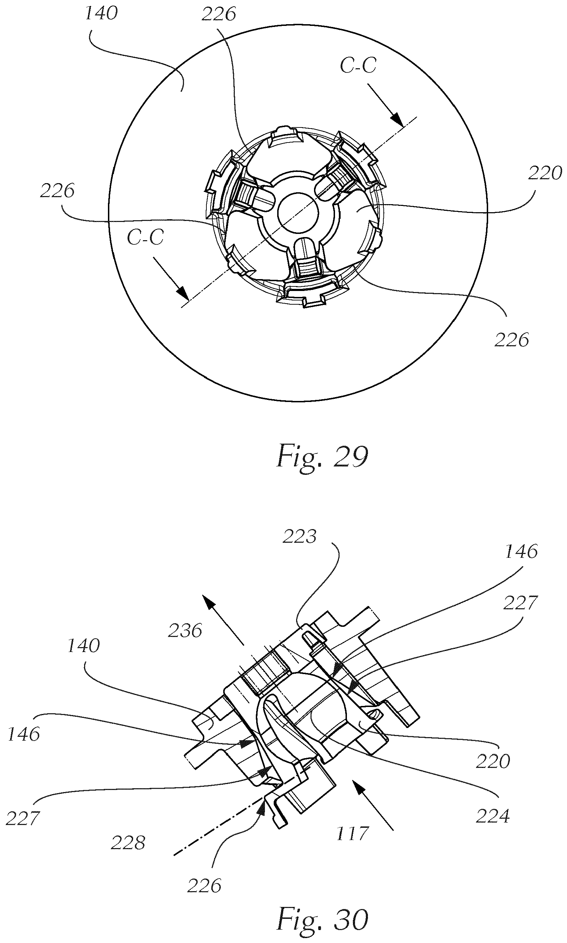

Ebenso sind die in der Ebene 128, 228 gelegenen zweiten Steuerkonturen 126, 226 eingerichtet, mit der Gelenkshülse 140 und den Rasthaken 123, 223 der Gelenkspfanne 120, 220 mit der Anlaufschräge 142 eine axiale Anpresskraft in Richtung der gedachten Längsachse 122, 222 der Gelenkspfanne zwischen der Gelenkshülse 140 und der Gelenkspfanne 120, 220 auszuüben. Dabei kommt die in der Ebene 228 gelegene Oberfläche der Flügel 221, wie beispielsweise im Folgenden in Fig. 30 erkennbar, mit der Unterseite der Gelenkshülse 140 in Kontakt, die die Steuerfläche 147 abschließt, und wird beim Aufgleiten der Rasthaken 223 auf die Anlaufschräge 142 gegen diese gespannt. Dadurch ist die Gelenkspfanne 120, 220 in Verriegelungsstellung in axialer Richtung in der Gelenkshülse 140 fixiert.

In **Fig. 19** ist die Gelenkshülse 140 dargestellt. Die Gelenkshülse 140 umfasst erste Steuerkonturen 146, die längs des Umfangs der ersten Öffnung 141 der Gelenkshülse 140 gelegen sind. Für dieses Ausführungsbeispiel ist festzuhalten, dass die ersten Steuerkonturen 146 lediglich dazu dienen, die Flügel 221 nach dem Einsetzen der Gelenkskugel 111 des Gelenkszapfens 110 in die Gelenkspfanne 220 zusammenzudrücken, jedoch nicht dermaßen stark, dass eine Anpresskraft durch die ersten Steuerkonturen 146 mittels der Steuerflächen 227 auf die Gelenkskugel 111 ausgeübt wird. In diesem Ausführungsbeispiel üben nur die zweiten Steuerkonturen 226 gemeinsam mit den zweiten Steuerflächen 147 die Anpresskraft auf die Gelenkskugel 111 aus, um eine Fixierung des Kugelgelenks 200 zu erreichen.

Selbstverständlich gibt es auch noch andere Ausführungsformen von Kugelgelenken, die eine Kraftausübung durch alle genannten Steuerkonturen 146, 126, 226 und Steuerflächen 127, 227, 147 auf die Gelenkskugel 111 durch die Flügel 121, 221 bewirken und durch den Schutzumfang der nachfolgenden Ansprüche abgedeckt sind.

Die Steuerflächen sind durch erste Steuerflächen 227 gebildet, die in einem Bereich der außenliegenden Oberfläche der Gelenkspfanne 220 und insbesondere an jenem Ende der Flügel 221 gelegen sind, die in Einbaurichtung 117 zeigen.

Die Steuerflächen sind ferner durch zweite Steuerflächen 226 gebildet, die in einem Bereich der innenliegenden Oberfläche der Gelenkshülse 140 gelegen sind.

Ferner sind auf der Gelenkshülse 140 Teilflächen ausgebildet, die längs des Umfangs einer gedachten kreisförmigen Linie, die durch die außenliegenden Begrenzungen der dritten Öffnungen 144 für Rasthaken 223 verläuft, angeordnet sind und deren innenliegende Flächen zweite Steuerflächen 147 bilden, die mit zweiten Steuerkonturen 226, die im Folgenden dargestellt sind, wechselwirken können. Die Teilflächen sind nur teilweise entlang des Umfangs der gedachten kreisförmigen Linie ausgebildet, um das Bauteil leichter und kostengünstiger zu machen.

Längs des Umfangs der ersten Öffnung 141 der Gelenkshülse 140 in axialer Richtung weitet sich die erste Öffnung 141 radial auf und bildet Pfannenaufnahmen 145 aus.

**Fig. 20** zeigt die Gelenkspfanne 220, wobei an den offenen Enden der Flügel 221 außenliegende zweite Steuerkonturen 226 mit Laschen 235, die beispielsweise wie gezeigt zusätzliche Anschlagelemente mit definierten Anschlagflächen tragen können, angeordnet sind, die mir den zweiten Steuerflächen 147 wechselwirken können.

**Fig. 21** zeigt die Gelenkshülse 140, in der die Anlaufschrägen 142 und die dritten Öffnungen 144 für Rasthaken 223 erkennbar sind.

**Fig. 22** zeigt die Gelenkspfanne 220, in der die Flügel 221, die zweiten Steuerkonturen 226 und die Rasthaken 223 erkennbar sind. Ferner ist ein erster Radius 229 in einem ersten Drehwinkel 230, ein zweiter Radius 231 in einem zweiten Drehwinkel 232 und ein dritter Radius 233 in einem dritten Drehwinkel 234 erkennbar. Die Radien 229, 231, 233 sowie die Drehwinkel 230, 232, 234 sind an jedem der drei Flügel 221 vorliegend, wobei sie jeweils in einem Winkel von 120° voneinander um die Längsachse 222 der Gelenkspfanne verdreht gelegen sind.

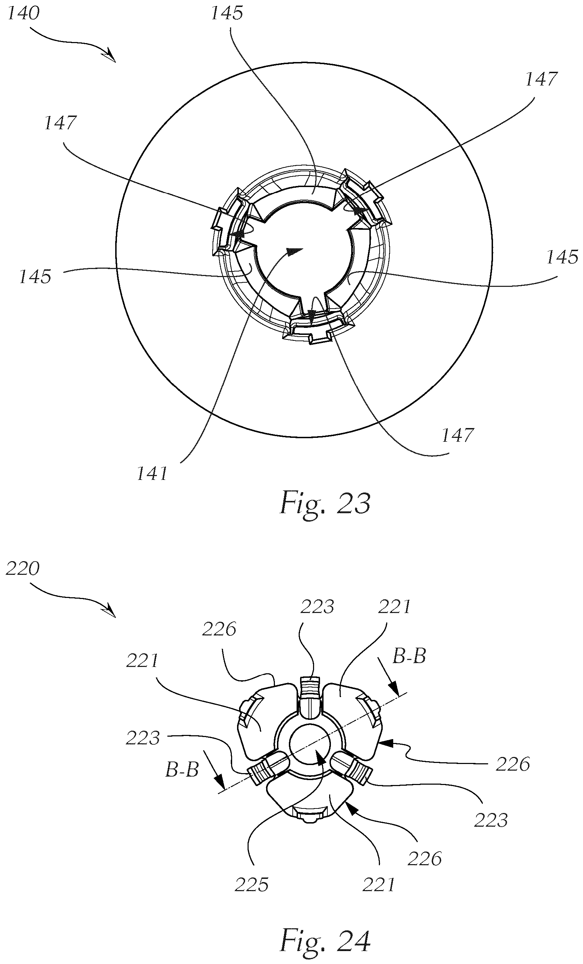

**Fig. 23** zeigt die Gelenkshülse 140, in der die Pfannenaufnahmen 145 und die zweiten Steuerflächen 226 erkennbar sind.

**Fig. 24** zeigt die Gelenkspfanne 220, in der die Flügel 221, die zweiten Steuerkonturen 226 und die Rasthaken 223 erkennbar sind.

**Fig. 25** zeigt die Gelenkshülse 140 in einem Schnitt A-A nach der Fig. 21, in der die Anlaufschrägen 142 erkennbar sind. Ferner sind die ersten Steuerkonturen 146, die in die Pfannenaufnahmen 145 übergehen, gezeigt. Außerdem sind die zweiten Steuerflächen 147 erkennbar.

**Fig. 26** zeigt die Gelenkspfanne 220 in einem Schnitt B-B nach der Fig. 24, in der die Flügel 221, die zweiten Steuerkonturen 226 und die Rasthaken 223 erkennbar sind. Ferner sind die ersten Steuerflächen 227 erkennbar, die auf der außenliegenden Fläche der Flügel 221 gelegen sind. Ferner ist eine Ebene 228 der Gelenkspfanne 220 erkennbar, die in zusammengebautem Zustand des Kugelgelenks 200 quer zur Einbaurichtung 117 gelegen ist, und in der Steuerkonturen 226 gelegen sein können, die mit Steuerflächen 147 auf der Gelenkshülse 140 wechselwirken können.

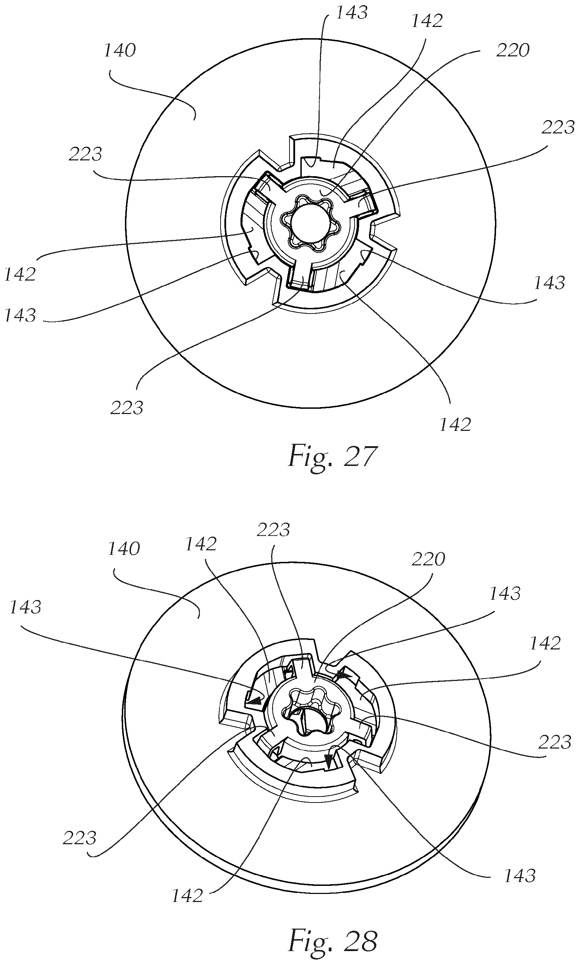

**Fig. 27** und **Fig. 28** zeigen die Gelenkshülse 140, in der die Gelenkspfanne 220 eingesetzt ist. Die u-förmigen Rasthaken 223 der Gelenkspfanne 220 sind in den dritten Öffnungen 144 für Rasthaken 223 eingesetzt und liegen mit deren offenen Enden auf Flächen auf, die an die dritten Öffnungen 144 radial anschließen und in einer Ebene mit dem Beginn der Anlaufschrägen 142 gelegen sind und in die Anlaufschrägen 142 übergehen. Folglich erstrecken sich die dritten Öffnungen 144 nicht über die gesamte radiale Breite der Anlaufschrägen 142, sondern bilden eine Einrastkante 148 für die eingesetzten Rasthaken 223. Die Rasthaken 223 sind daher nach dem Einsetzen in die dritten Öffnungen 144 und der Einrastkante 148 vorverrastet, indem die u-förmigen Rasthaken 223 durch die dritten Öffnungen 144 hindurch gesteckt werden, dabei die Rasthaken 223 durch die dritten Öffnungen 144 radial zusammengedrückt werden und sich bei weiterem Durchführen über die dritten Öffnungen 144 hinaus wieder durch eine elastische Federkraft selbst entspannen und durch die Einrastkante 148 gegen Verrutschen oder eine Entnahme gesichert sind. Die Anordnung bildet derart eine Grundstellung des Kugelgelenks 200. Bei Verdrehung gleiten die Rasthaken 223 auf die Anlaufschrägen 142. Die schraffierten Bereiche auf den Anlaufschrägen 142 bezeichnen radial verlaufende Rampen, in der die Anlaufschrägen 142 axial eine Vergrößerung der Dicke der Auflagefläche gegenüber der Fläche, die quer zur Einsetzrichtung der Gelenkspfanne 220 in die Gelenkshülse 140 gelegen ist, aufweist.

Ebenso sind die zuvor genannten Ausweitungen 143 der Anlaufschrägen 142 zu erkennen, die zum Einrasten der Rasthaken 223 dienen und eine mögliche nachfolgende Bewegung entgegen der Richtung der Verriegelungsbewegung verhindern. Die Anlaufschrägen 142 sind jeweils durch die genannten Ausweitungen und die dritten Öffnungen 144 der Rasthaken 223 begrenzt.

**Fig. 29** und **Fig. 30** zeigen die Gelenkshülse 140, in der die Gelenkspfanne 220 eingesetzt ist in der Grundstellung des Kugelgelenks 200. Es ist erkennbar, dass in der Grundstellung die zweiten Steuerkonturen 226 mit den zugehörigen zweite Steuerflächen 226 verdreht sind, sodass zwischen den zweiten Steuerkonturen 226 und den zweite Steuerflächen 147 keine Wechselwirkung in der Grundstellung erfolgen kann. Die ersten Steuerkonturen 146 können ebenso erst nach Verdrehung mit den ersten Steuerflächen 227 wechselwirken.

Es ist ferner erkennbar, dass die ersten Steuerflächen 227 nicht an den Pfannenaufnahmen 145 anliegen, sodass eine Aufdehnung der Flügel 221 möglich ist. Diese Aufdehnung ist dafür vorgesehen, um einen Gelenkzapfen 110 mit einer Gelenkskugel in die Gelenkspfanne 220 einzuführen. Dieser Vorgang ist in **Fig. 31** bis **Fig. 32** dargestellt. Fig. 30 zeigt die Gelenkspfanne 220 im Schnitt C-C nach Fig. 29, wobei erkennbar ist, dass sich die Flügel 221 in einem nicht aufgedehnten Zustand befinden. In Fig. 29 ist gezeigt, dass ein gedachter Kreis, der durch die zweiten Steuerkonturen 226 quer zur Einbaurichtung 117 verläuft, etwa der ersten Öffnung 141 der Gelenkshülse 140 entspricht, während in Fig. 31 der gedachte Kreis im aufgedehnten Zustand der Gelenkspfanne 220 wesentlich größer ist. Fig. 32 zeigt eine Ansicht im Schnitt D-D nach Fig. 31.

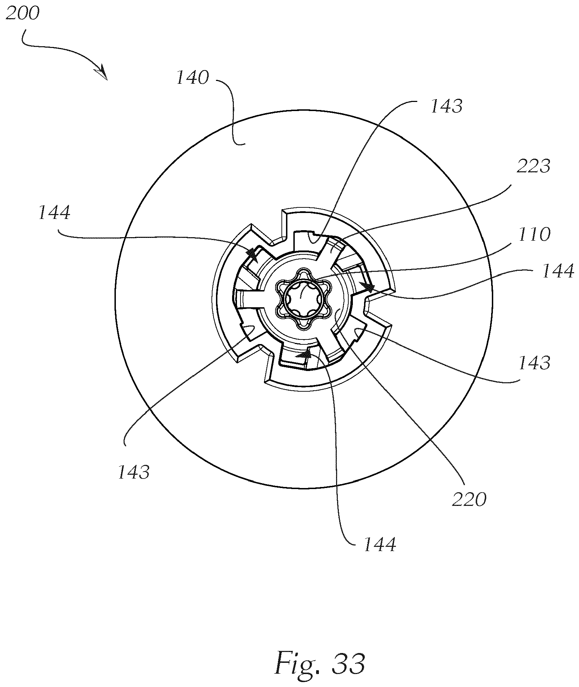

In **Fig. 33** ist eine zweite, verdrehte Stellung des zusammengebauten Kugelgelenks 200, umfassend den Gelenkszapfen 110, die Gelenkspfanne 220 und die Gelenkshülse 140 dargestellt. Die angewandte Verdrehung beträgt in etwa die Hälfte des durch die Anlaufschrägen 142 begrenzten Verdrehbereichs.

**Fig. 34** zeigt die Gelenkspfanne 220 und die Gelenkshülse 140, wobei in der zweiten Stellung des Kugelgelenks 200 die Rasthaken 223 durch die Anlaufschrägen 142 eine axiale Zugkraft auf das Kugelgelenk 200 ausüben und die Gelenkspfanne 220 in die Gelenkshülse 140 zieht. Dadurch wird erreicht, dass die ersten Steuerkonturen 146 in Form von Steuerkanten mit den ersten Steuerflächen 227 in Kontakt kommen und in Wechselwirkung treten können. Die Wechselwirkung bewirkt, dass die Flügel 221 durch die erste Steuerkonturen 146 radial aneinander gedrückt werden, wie in Fig. 35 ersichtlich. In der zweiten Stellung sind die zweiten Steuerkonturen 226, die in der Ebene 228 liegen, mit Abschnitten, deren radialer Abstand dem zweiten Radius entspricht mit den zugehörigen zweiten Steuerflächen 147 in Anschlag. Die endgültige Feststellung des Kugelgelenks 200 wird erreicht, wenn die Laschen 235 mit ihren Anschlagelementen mit den zweiten Steuerflächen 147 in Wechselwirkung treten und ein zusammengebauter Zustand wird erreicht. Da die zweite Steuerkontur 226 bei einer Drehung um die gedachte Längsachse 222 der Gelenkspfanne einen ansteigenden Abstand aufweist, werden die Flügel mit zunehmender Drehung der Gelenkspfanne 220 gegenüber der Gelenkshülse 140 radial nach innen bewegt und die Innenseite der Gelenkspfanne 220 an die Gelenkskugel 111 gepresst. Die radial wirkende Anpresskraft bewirkt in diesem Ausführungsbeispiel durch die Verschiebung der Gelenkskugel 111 in die Gelenkspfanne 220 hinein die Ausbildung auch einer axialen Komponente der Anpresskraft. Diese Komponente ergibt sich insbesondere aus der hohen Umschließung der Gelenkskugel 111.

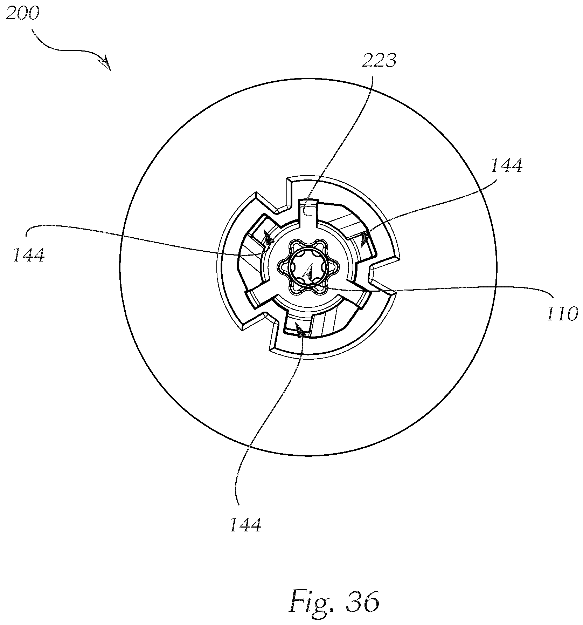

In **Fig. 36** ist das zusammengebaute Kugelgelenk 200, umfassend den Gelenkszapfen 110, die Gelenkspfanne 220 und die Gelenkshülse 140 in einer Endstellung der Verdrehung dargestellt. Es ist erkennbar, dass die Rasthaken 223 in die Aufweitungen der Anlaufschrägen 143 eingerastet sind.

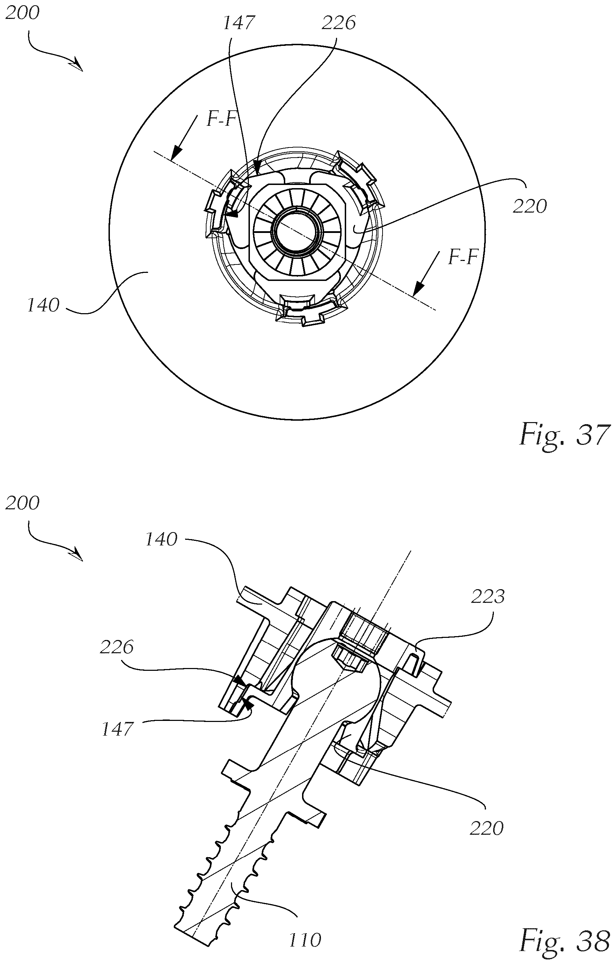

**Fig. 37** zeigt die Gelenkspfanne 220 und die Gelenkshülse 140, wobei in der Endstellung des Kugelgelenks 200 die zweiten Steuerkonturen 226 mit den zweiten Steuerflächen 147 in Kontakt kommen und in Wechselwirkung treten können. Die Wechselwirkung bewirkt, dass die Flügel 221 durch die zweiten Steuerkonturen 226 radial weiter aneinander und an die Gelenkskugel 111 gedrückt werden, wie in **Fig. 38** erkennbar.

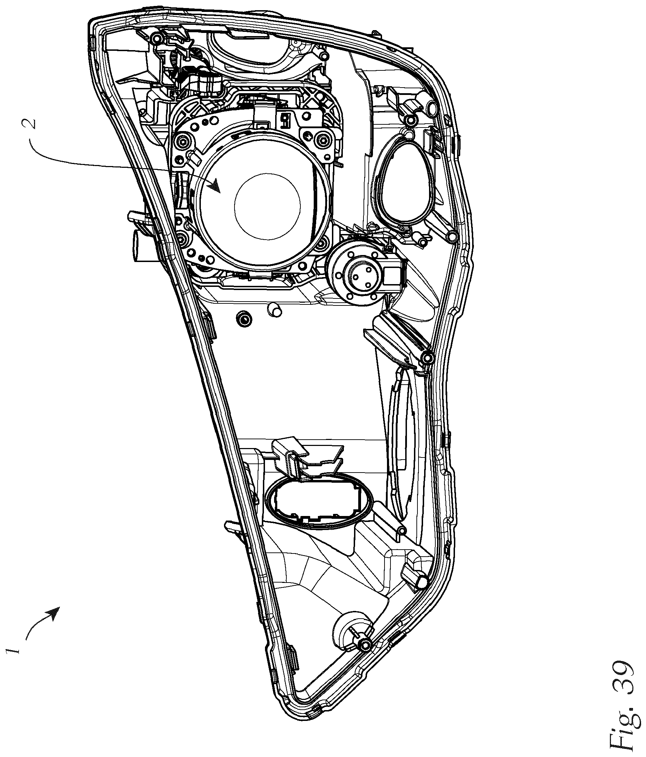

**Fig. 39** zeigt einen Fahrzeugscheinwerfer 1 mit einem Lichtmodul 2 und einem Kugelgelenk 200 gemäß der vorhergehenden Figuren in einer Ansicht von vorne. Das Lichtmodul 2 kann eine Lichtquelle und optische Elemente umfassen, und ist in diesem Beispiel in den Fahrzeugscheinwerfer 1 eingebaut dargestellt. Das Kugelgelenk 200 bildet eine verstellbare mechanische Schnittstelle zwischen dem Fahrzeugscheinwerfer 1 und dem Lichtmodul 2.

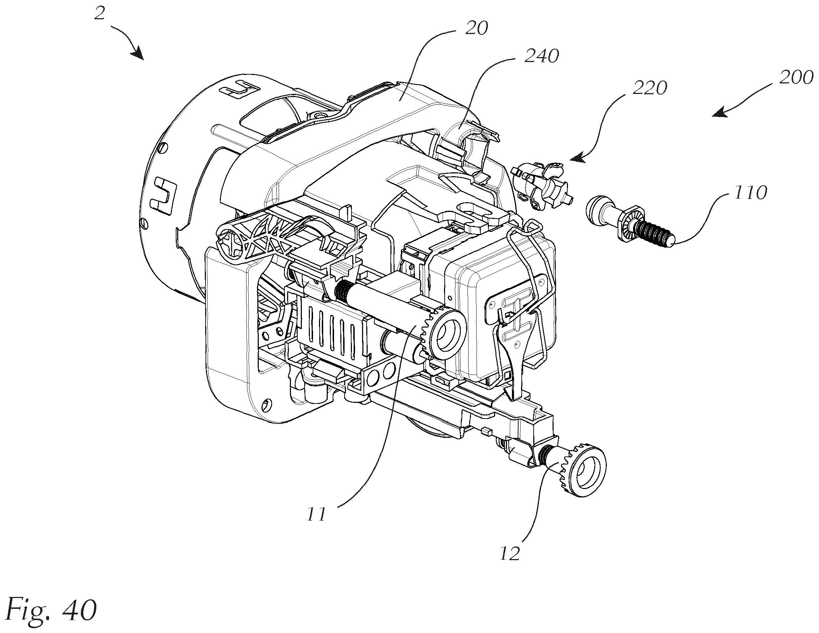

**Fig. 40** zeigt das Lichtmodul 2 nach der Fig. 39 in einer perspektivischen Ansicht von hinten, mit dem Kugelgelenk 200, umfassend den Gelenkszapfen 110, die Gelenkspfanne 220 und die Gelenkshülse 240 in einer Explosionsdarstellung. Die Gelenkshülse 240 ist durch ein Gehäuseteil des Lichtmoduls 2 gebildet.

Das Lichtmodul ist im Fahrzeugscheinwerfer 1 durch eine Dreipunktaufhängung montiert. Die Dreipunktaufhängung umfasst ein festes Bein 10, das aus dem Kugelgelenk 200 mit dem Gelenkszapfen 110, der Gelenkspfanne 220 und der Gelenkshülse 240, welche in diesem Beispiel Teil des Lichtmoduls 2 ist, gebildet ist, sowie zwei verstellbare Beine 15, 16, welche als Einstellschrauben ausgeführt sind und somit eine einfache Verstellung ermöglichen, und die untereinander vorzugsweise ein gleichseitiges Dreieck bilden, wobei grundsätzlich alle dreieckigen Anordnungen mit drei Beinen geeignet sind. Das Kugelgelenk 200 auf dem festen Bein 10 dient als Fixpunkt der Dreipunktaufhängung, die eine sphärisch verstellbare Verbindung zwischen dem Gehäuse und dem Modul herstellt. Auch die zwei verstellbaren Beine 15, 16 umfassen jeweils ein Kugelgelenk.

Unter dem festen Bein 10 ist ein Bein mit zwei Enden zu verstehen, dessen Länge zwischen den zwei Enden nicht einstellbar ist und bei dem an einem Ende das Kugelgelenk gelegen ist. Unter den zwei verstellbaren Beinen 15, 16 sind Beine mit jeweils zwei Enden zu verstehen, deren Länge jeweils zwischen den zwei Enden einstellbar ist und bei denen jeweils an einem Ende das Kugelgelenk gelegen ist.

Mittels der Dreipunktaufhängung wird erreicht, dass das Lichtmodul 2 mit dem Fahrzeugscheinwerfer 1 gelenkig befestigt werden kann und Möglichkeit zur gegenseitigen Feinjustierung bietet. Mit anderen Worten ist die Dreipunktaufhängung gemeinsam durch das feste Bein 10, welches aus dem Kugelgelenk 100, 200 gebildet ist, und den zwei, in der Länge variabel einstellbaren Beinen 15, 16 gebildet. Jeweils ein Ende eines Beins 10, 15, 16 ist mit dem Lichtmodul 2 verbunden, und das jeweilige andere Ende desselben Beins 10, 15, 16 ist mit dem Fahrzeugscheinwerfer 1 verbunden. Durch die variabel einstellbare Länge der verstellbaren Beine 15, 16 kann das Lichtmodul 2 gegenüber dem Scheinwerfer 1 justiert werden. Dem Fachmann ist an dieser Stelle klar, wie die Enden der Beine 10, 15, 16 mit den jeweiligen Stellen des Scheinwerfers 1 bzw. dem Lichtmodul 2 verbunden sein können, sowohl beispielsweise durch eine schraubbare Anordnung, als auch durch Ausbildung des Gelenkszapfens 110 und/oder der Gelenkshülse 240, beispielsweise eine einteilige Ausbildung mit der Komponente, an der das Kugelgelenk festgemacht werden soll.

In diesem Ausführungsbeispiel weist der Gelenkszapfen 110 ein Gewinde auf dem Gelenkschaft 112 auf, der in eine Öffnung mit einem komplementär geformten Innengewinde eingreifen kann und bei einer Drehung im Innengewinde eine Längsbewegung in Richtung der gedachte Längsachse 114 des Gelenkszapfens ausführen kann, wodurch eine zusätzliche Justierbewegung der Dreipunktaufhängung erreicht werden kann. Zur Ausübung der Drehung im Innengewinde kann der Gelenkszapfen 110 an dessen Gelenkskugel 111 beispielsweise einen Schlitz oder eine Ausnehmung in Form eines sechskantigen Volumens zu Aufnahme eines entsprechenden Schraubenziehers aufweisen, welcher/ welche durch das Lichtmodul 2 zugänglich ist.

Der Fahrzeugscheinwerfer 1 bzw. das Lichtmodul 2 ist insbesondere zur Erzeugung einer Fernlicht- und/ oder einer Abblendlicht-Lichtverteilung vorgesehen und kann eine Feinjustierung der abgestrahlten Lichtverteilung nach Betriebsvorschriften oder gesetzlichen Einbauvorschriften erfordern. Es kann auch notwendig sein, dass diese Feinjustierung im Laufe des Betriebs des Fahrzeugs wiederholt werden muss.

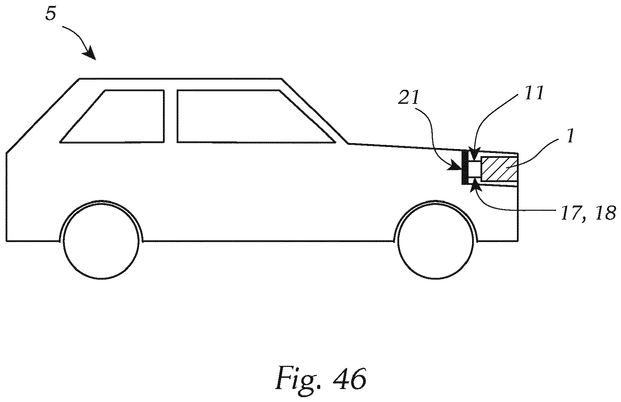

Alternativ kann das Kugelgelenk auch verwendet werden, um den Fahrzeugscheinwerfer 1 mit einer fahrzeugseitig gelegenen Trägereinheit eines Fahrzeugs im Zuge der Scheinwerfermontage verbunden werden. Diese Ausführungsform ist in **Fig. 46** gezeigt. Dabei sind die Beine 11, 17, 18 zwischen dem Fahrzeugscheinwerfer 1 und einer fahrzeugseitig gelegenen Trägereinheit 21 eines Fahrzeugs 5, beispielsweise ein Karosserie- oder Trägerteil, angeordnet. Dadurch kann erreicht werden, dass die Justierung des Lichtmoduls 2 alternativ oder zusätzlich zwischen dem Fahrzeugscheinwerfer 1 und dem Fahrzeug 5 erfolgt.

Die Gelenkshülse 240 kann in weiteren Ausführungsformen der Erfindung bei einer Anordnung zwischen einem Lichtmodul und einem Scheinwerfer scheinwerferseitig gelegen sein, als auch bei einer Anordnung zwischen einem Scheinwerfer und einem Fahrzeug fahrzeugseitig gelegen sein, und dort jeweils eine gemeinsame Komponente mit einem jeweiligen Trägerteil bilden.

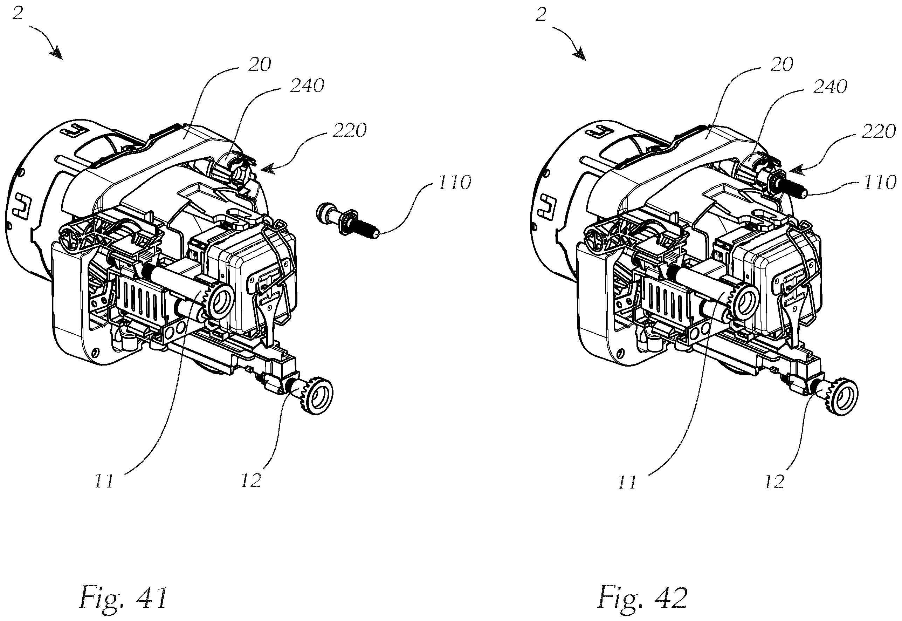

In den **Fig. 41- 44** ist nun der Zusammenbau des Kugelgelenks 200 für das Lichtmodul 2 schrittweise dargestellt, wobei in den gezeigten Schritten die einzelnen Komponenten des Kugelgelenks 100, der Gelenkszapfen 110, die Gelenkspfanne 220 und die Gelenkshülse 240 zusammengebaut werden, über eine axiale Feststell-Drehung gemäß der vorhergehenden Beschreibung der Gelenkspfanne 220 gegenüber der Gelenkshülse 240 festgemacht bzw. fixiert wird und ein zusammengebauter bzw. ein festgemachter Zustand des Kugelgelenks 200 erreicht wird.

**Fig. 41** zeigt das Lichtmodul 2 nach Fig. 40, wobei die Gelenkspfanne 220 in die Gelenkshülse 240, welche das Lichtmodul 2 umfasst, eingesetzt ist.

**Fig. 42** zeigt das Lichtmodul 2 nach Fig. 41, wobei der Gelenkszapfen 110 in die Gelenkspfanne 220 lose eingesetzt ist, d.h. die Flügel 221 der Gelenkspfanne 220 liegen in diesem Zustand noch nicht eng an der Gelenkskugel 111 des Gelenkszapfens 110 an.

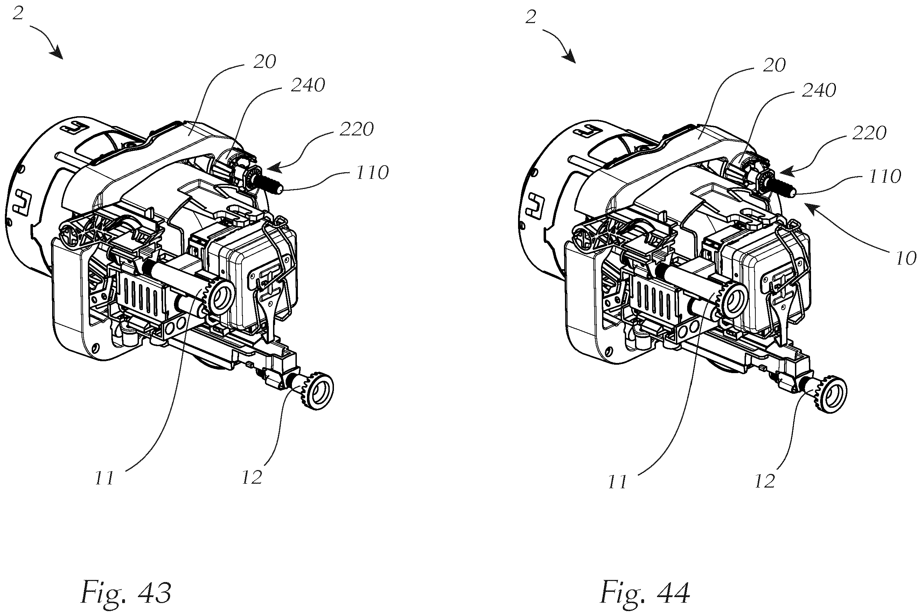

**Fig. 43** zeigt das Lichtmodul 2 nach Fig. 42, wobei die Gelenkspfanne 220 gegenüber der Gelenkshülse 240 verdreht ist.

**Fig. 44** zeigt das Lichtmodul 2 nach Fig. 43, wobei die Gelenkspfanne 220 gegenüber der Gelenkshülse 240 in einer Endposition axial verdreht ist.

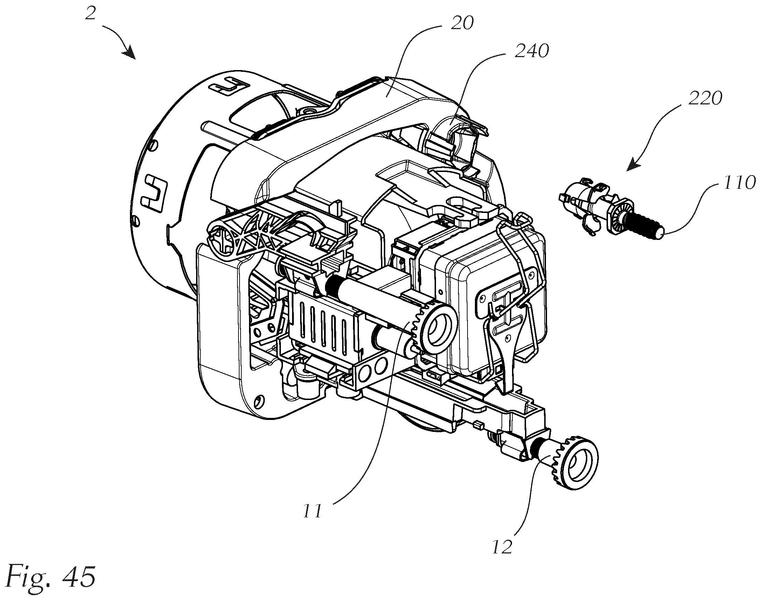

**Fig. 45** stellt das Lichtmodul 2 nach Fig. 40 dar, wobei ein Zusammenbau des Kugelgelenks 200 in einer geänderten Reihenfolge erfolgt, indem zunächst der Gelenkszapfen 110 in die Gelenkspfanne 220 eingesetzt wird, und erst dann in die Gelenkshülse 240 eingesetzt wird (nicht dargestellt), und auf diesem Weg das Kugelgelenk 200 zusammengesetzt wird, über eine axiale Feststell-Drehung gemäß der vorhergehenden Beschreibung der Gelenkspfanne 220 gegenüber der Gelenkshülse 240 festgemacht bzw. fixiert wird und ein zusammengebauter Zustand erreicht wird.

**Fig. 46** stellt schematisch ein Fahrzeug 5, insbesondere ein Kraftfahrzeug, mit einem Fahrzeugscheinwerfer 1 dar, welcher ein festes Bein 11 sowie zwei variable Beine 17, 18 zur Befestigung des Fahrzeugscheinwerfer 1 am Fahrzeug 5 umfasst. Die Beine 11, 17, 18 bilden gemeinsam ein Einstelldreieck, mit welchem der Scheinwerfer 1 mit einer Trägereinheit 21 des Fahrzeugs 5 einstellbar verbunden ist. Das feste Bein 11, sowie die verstellbaren Beine 17, 18 umfassen dabei an einem Ende jeweils ein Kugelgelenk 200, welches jeweils aus dem Gelenkszapfen 110, der Gelenkspfanne 220 und der Gelenkshülse 240 gebildet ist und wobei die Gelenkshülse 240 im Tragrahmen 20 des Fahrzeugscheinwerfer 1 integriert sein kann (in dieser Figur nicht gezeigt), oder beispielsweise auch in einen Teil des Gehäuses des Fahrzeugscheinwerfer 1 integriert sein kann.

Es kann auch vorgesehen sein, dass die Gelenkshülse 240 in einem fahrzeugseitig gelegenen Bauteil, beispielsweise in der Trägereinheit 21 des Fahrzeugs 5 ausgebildet oder integriert ist.

Nachdem der Scheinwerfer 1 ein Gewinde zur Aufnahme des Gelenkszapfens 110 aufweist, kann das Kugelgelenk 200 logisch auch dem Scheinwerfer 1 zugeordnet werden und folglich das Kugelgelenk 200 auch als vom Scheinwerfer 1 umfasst angesehen werden. Dies gilt auf für die vorhergehenden Figuren.

Ferner gelten die Ausführungen der vorhergehenden Figuren.

**Liste der Bezugszeichen:**

| | | | |
|---|---|---|---|
| 1 | Fahrzeugscheinwerfer | 125, 225 | zweite Öffnung der Gelenkspfanne |
| 2 | Lichtmodul | | |
| 5 | Fahrzeug | 126, 226 | zweite Steuerkontur |
| 10,11 | festes Bein | 127, 227 | erste Steuerfläche |
| 15, 16, 17, 18 | verstellbares Bein | 128, 228 | Ebene der Gelenkspfanne |
| 20 | Tragrahmen | 129, 229 | erster Radius |
| 21 | Trägereinheit | 130, 230 | erster Drehwinkel |
| 100, 200 | Kugelgelenk | 131, 231 | zweiter Radius |
| | | 132, 232 | zweiter Drehwinkel |
| 110 | Gelenkszapfen | 133, 233 | dritter Radi3 |
| 111 | Gelenkskugel | 134, 234 | dritter Drehwinkel |
| 112 | Gelenkschaft | 135, 235 | Lasche |
| 113 | Gelenkskante | 136, 236 | Einbaurichtung der Gelenkspfanne |
| 114 | gedachte Längsachse des Gelenkszapfens | | |
| | | 137 | Endanschlag |
| 115 | gedachte Längsachse des Gelenkschafts | 140 | Gelenkshülse |
| 116 | Montageausnehmung | 141 | erste Öffnung der Gelenkshülse |
| 117 | Einbaurichtung des Gelenkszapfens | | |
| | | 142 | Anlaufschräge |
| | | 143 | Aufweitung der |
| 120, 220 | Gelenkspfanne | | Anlaufschräge |
| 121, 221 | Flügel | 144 | dritte Öffnung für Rasthaken |
| 122, 222 | gedachte Längsachse der Gelenkspfanne | 145 | Pfannenaufnahme |
| | | 146 | erste Steuerkontur |
| 123, 223 | Rasthaken | 147 | zweite Steuerfläche |
| 124, 224 | Filmscharnier | 148 | Einrastkante |

## Patentansprüche

1. Fahrzeugscheinwerfer (1), insbesondere zur Erzeugung einer Fernlicht- und/ oder einer Abblendlicht-Lichtverteilung, **dadurch gekennzeichnet, dass** ein Kugelgelenk (100, 200), ein Lichtmodul (2) und ein Tragrahmen (20) umfasst ist, wobei das Kugelgelenk (100, 200) den Tragrahmen (20) mit dem Lichtmodul (2) oder einer fahrzeugseitig gelegenen Trägereinheit (21) verbindet und das Kugelgelenk (100, 200) in einer Gelenksposition fixierbar ist, wobei das Kugelgelenk (100, 200) umfasst:
einen Gelenkszapfen (110), der eine Gelenkskugel (111) umfasst, die auf einer Seite in eine Stirnseite eines im Wesentlichen zylindrisch geformten Gelenkschafts (112) übergeht, eine Gelenkspfanne (120, 220) zur Aufnahme der Gelenkskugel (111), und
eine Gelenkshülse (140) zur Aufnahme der Gelenkspfanne (120, 220), **dadurch gekennzeichnet, dass** die Gelenkspfanne (120, 220) zumindest zwei, vorzugsweise drei Flügel (121, 221) umfasst, die entlang dem Umfang der Gelenkspfanne (120, 220) aufeinander folgend angeordnet sind und im fixierten Zustand des Kugelgelenks (100, 200) auf der Gelenkskugel (111) eine innenliegende Gelenksfläche des Kugelgelenks (100, 200) bilden und die Gelenkskugel (111) umschließen, die im fixierten Zustand des Kugelgelenks (100, 200) komplementär zur Oberfläche der Gelenkskugel (111) geformt ist, wobei die Gelenkshülse (140) vorzugsweise von dem Tragrahmen (20) oder der Trägereinheit (21) umfasst ist, wobei die Gelenkshülse (140) zumindest teilweise die Flügel (121, 221) der Gelenkspfanne (120, 220) umschließt,
wobei das Kugelgelenk (100, 200) zumindest eine Steuerkontur (146; 126, 226) umfasst, die eingerichtet ist, durch eine Drehbewegung zwischen der Gelenkspfanne (120, 220) und der Gelenkshülse (140) durch die Flügel (121, 221) der Gelenkspfanne (120, 220) eine radiale Anpresskraft auf die Gelenkskugel (111) auszuüben und das Kugelgelenk (100, 200) dadurch fixiert werden kann, wobei zwischen den beiden Enden der Flügel (121, 221) jeweils ein entlang dem Umfang verlaufendes Filmscharnier (124, 224) ausgebildet ist.

2. Fahrzeugscheinwerfer (1) nach Anspruch 1, **dadurch gekennzeichnet, dass** die zumindest eine Steuerkontur (146; 126, 226) durch eine erste Steuerkontur (146) gebildet ist, die an der Gelenkshülse (140) gelegen ist, bevorzugt in einem Bereich der innenliegenden Oberfläche der Gelenkshülse (140), besonders bevorzugt in einem Bereich der ersten Öffnung (141) der Gelenkshülse (140),
oder die zumindest eine Steuerkontur (146; 126, 226) durch eine zweite Steuerkontur (126, 226) gebildet ist, die der Gelenkspfanne (120, 220) gelegen ist, bevorzugt in einem Bereich der außenliegenden Oberfläche der Gelenkspfanne (120, 220), besonders bevorzugt auf der außenliegenden Oberfläche der Flügel (121, 221),
wobei die zumindest eine zweite Steuerkontur (23) an einem Ende der Flügel (121, 221) gelegen ist und bevorzugt in einem Bereich, dessen Länge 20% der Länge der Flügel (121, 221), besonders bevorzugt 10% der Länge der Flügel (121, 221) beträgt,
oder die zumindest eine zweite Steuerkontur (126, 226) in zusammengebautem Zustand des Kugelgelenks (100, 200) in einer Ebene (128, 228) quer zur Einbaurichtung (117) gelegen ist und deren radialer Abstand von einem ersten Radius (129, 229) in einem ersten Drehwinkel (130, 230) um die gedachte Längsachse (122, 222) der Gelenkpfanne zu einem zweiten Radius (131, 231) in einem zweiten Drehwinkel (132, 232) um die gedachte Längsachse (122, 222) der Gelenkpfanne übergeht, wobei der erste Radius (129, 229) kleiner als der zweite Radius (131, 231) ist, und die zumindest eine zweite Steuerkontur (126, 226) bevorzugt weiter zu einem dritten Radius (133, 233) in einem dritten Drehwinkel (134, 234) um die gedachte Längsachse (122, 222) der Gelenkpfanne übergeht, wobei der dritte Radius (133, 233) vorzugsweise dem ersten Radius (129, 229) entspricht, oder der dritte Radius (133, 233) dem zweiten Radius (131, 231) entspricht und vorzugsweise der erste Drehwinkel (130, 230) gegenüber dem zweiten Drehwinkel (132, 232) demselben Betrag entspricht, wie der zweite Drehwinkel (132, 232) gegenüber dem dritten Drehwinkel (134, 234).

3. Fahrzeugscheinwerfer (1) nach einem der Ansprüche 1 oder 2, **dadurch gekennzeichnet, dass** das Kugelgelenk (100, 200) zumindest eine Steuerfläche (127,227; 147) umfasst, die eingerichtet ist, mit der zumindest einen Steuerkontur (146; 126, 226) zusammenzuwirken und die zumindest eine Steuerkontur (146; 126, 226) an die zumindest eine Steuerfläche (127, 227; 147) zu drücken und ferner ein axiales Verrutschen zwischen der Gelenkspfanne (120, 220) und der Gelenkshülse (140) gegen die Einbaurichtung (117) zu verhindern,
wobei die zumindest eine Steuerfläche (127, 227; 147) durch zumindest eine erste Steuerfläche (127, 227) gebildet ist, die bevorzugt in einem Bereich der außenliegenden Oberfläche der Gelenkspfanne (120, 220) und besonders bevorzugt an jenem Ende der Flügel (121, 221) gelegen ist, das in Einbaurichtung (117) zeigt,
oder die zumindest eine Steuerfläche (127, 227; 147) durch eine zweite Steuerfläche (147) gebildet ist, die bevorzugt in einem Bereich der innenliegenden Oberfläche der Gelenkshülse (140) gelegen ist,
wobei in der Position des zweiten Drehwinkels (132, 232) die zumindest eine zweite Steuerkontur (126, 226) zumindest eine Lasche (135, 235) aufweist, die sich axial und in einem radialen Abstand des zweiten Radius (131, 231) erstreckt und eingerichtet ist, durch Wechselwirkung mit der zweiten Steuerfläche (147) eine radiale Anpresskraft auf die Gelenkskugel (111) auszuüben.

4. Fahrzeugscheinwerfer (1) nach einem der Ansprüche 1 bis 3, **dadurch gekennzeichnet, dass** sich die Flügel (121, 221) in einem unverstellten Zustand, in dem eine gedachte Längsachse (114) des Gelenkszapfens (110) mit einer gedachten Längsachse (122, 222) der Gelenkspfanne (120, 220) übereinstimmt, zumindest bis zu einer Gelenkskante (113) erstrecken, wobei auf der Oberfläche des Gelenkszapfens (110) zwischen dem Gelenkschaft (112) und der Gelenkskugel (111) die entlang dem Umfang der Gelenkspfanne (120, 220) verlaufende Gelenkskante (113) ausgebildet ist,
wobei die Flügel (121, 221) der Gelenkspfanne (120, 220) in ihrer axialen Länge über die Gelenkskante (113) hinaus verlaufen und dabei die radialen Abstände der innenliegenden Seite der Flügel (121, 221) zur gedachten Achse (115) des Gelenkschafts (112) zumindest nicht geringer werden,
und/ oder die Flügel (121, 221) zwischen deren beiden Enden einen verjüngenden Querschnitt in radialer Richtung aufweisen,
wobei die Flügel (121, 221) im fixierten Zustand des Kugelgelenks (100, 200) durch die Gelenkshülse (140) jeweils in Bereichen neben dem in radialer Richtung verjüngten Querschnitt an die Gelenkskugel gedrückt werden, bevorzugt jeweils durch eine Steuerkontur (146; 126, 226) und eine Steuerfläche (127, 227; 147).

5. Fahrzeugscheinwerfer (1) nach einem der Ansprüche 1 bis 4, **dadurch gekennzeichnet, dass** die Gelenkspfanne (120, 220) im Bereich ihrer Flügel (121, 221) in deren Außenkontur durch die Form eines Kegelstumpfs begrenzt ist, wobei der Kegelstumpf von den offenen Enden der Flügel (121, 221) hin zu dem die Flügel (121, 221) verbindenden Bereich der Gelenkspfanne (120, 220) im Außenradius abnimmt.

6. Fahrzeugscheinwerfer (1) nach einem der Ansprüche 1 bis 5, **dadurch gekennzeichnet, dass** die Flügel (121, 221) an einem Ende entlang dem Umfang der Gelenkspfanne (120, 220) durchgängig miteinander verbunden sind und ein gemeinsames Bauteil bilden.

7. Fahrzeugscheinwerfer (1) nach einem der Ansprüche 1 bis 6, **dadurch gekennzeichnet, dass** die Gelenkspfanne (120, 220) eine abschließende Stirnseite mit einer zentrischen zweiten Öffnung (125, 225) aufweist, wobei die Stirnseite an den die Flügel (121, 221) verbindenden Bereich der Gelenkspfanne (120, 220) angrenzt.

8. Fahrzeugscheinwerfer (1) nach Anspruch 7, **dadurch gekennzeichnet, dass** an dem miteinander verbindenden Bereich der Gelenkspfanne (120, 220) und vorzugsweise entlang deren Umfang Rasthaken (123, 223) ausgebildet sind, die vorzugsweise eingerichtet sind, ein axiales, gegen die Einbaurichtung (117) des Gelenkszapfens (110) gerichtetes Verrutschen der Gelenkspfanne (120, 220) zu verhindern.

9. Fahrzeugscheinwerfer (1) nach Anspruch 8, **dadurch gekennzeichnet, dass** die Rasthaken (123, 223) entlang des Umfangs zwischen den Flügeln (121, 221) angeordnet und vorzugsweise u-förmig und vorzugsweise elastisch deformierbar ausgebildet sind.

10. Fahrzeugscheinwerfer (1) nach Anspruch 2, wenn die zumindest eine Steuerkontur (146; 126, 226) durch die zweite Steuerkontur (126, 226) gebildet ist, und einem der Ansprüche 8 oder 9, **dadurch gekennzeichnet, dass** die in der Ebene (128, 228) gelegene zumindest eine zweite Steuerkontur (126, 226) eingerichtet ist, mit der Gelenkshülse (140) und die Rasthaken (123, 223) der Gelenkspfanne (120, 220) mit einer Anlaufschräge (142) eine axiale Anpresskraft in Richtung der gedachten Längsachse (122, 222) der Gelenkspfanne zwischen der Gelenkshülse (140) und der Gelenkspfanne (120,220) auszuüben.

11. Fahrzeugscheinwerfer (1) nach einem der Ansprüche 1 bis 10, **dadurch gekennzeichnet, dass** die Gelenkshülse (140) die zumindest eine Anlaufschräge (142) umfasst, die längs des Umfangs eines gedachten Kreises angeordnet ist, wobei der gedachte Kreis konzentrisch um die erste Öffnung (141) der Gelenkshülse (140) gelegen ist.

12. Fahrzeugscheinwerfer (1) nach Anspruch 11, **dadurch gekennzeichnet, dass** die Rasthaken (123, 223) bei einer axialen Verdrehung der Gelenkspfanne (120, 220) bezüglich der Gelenkshülse (140) auf der Anlaufschräge (142) gleiten und dabei axial eine Zugkraft ausüben, die die Gelenkspfanne (120, 220) in die Gelenkshülse (140) drückt.

13. Fahrzeugscheinwerfer (1) nach einem der Ansprüche 1 bis 12, **dadurch gekennzeichnet, dass** das Kugelgelenk (100, 200) an dem oder innerhalb des Fahrzeugscheinwerfers (1) angeordnet ist und dazu eingerichtet ist, den Fahrzeugscheinwerfer (1) in einer Einbaulage zu fixieren, wobei der Fahrzeugscheinwerfer (1) ein festes Bein (11) sowie zwei variable Beine (17, 18) zur Befestigung des Fahrzeugscheinwerfer (1) an einem Fahrzeug (5) umfasst, wobei die Beine (11, 17, 18) gemeinsam ein Einstelldreieck bilden, mit welchem der Scheinwerfer (1) mit einer Trägereinheit (21) des Fahrzeugs (5) einstellbar verbunden ist, wobei das feste Bein (11), sowie die verstellbaren Beine (17, 18) dabei an einem Ende jeweils ein Kugelgelenk (100, 200) umfassen.

14. Fahrzeugscheinwerfer (1) nach einem der Ansprüche 1 bis 13, **dadurch gekennzeichnet, dass** ferner eine Dreipunktaufhängung mit drei Beinen (10, 11, 15, 16, 17, 18) zur Befestigung des Lichtmoduls (2) am Fahrzeugscheinwerfer (1) oder des Fahrzeugscheinwerfers (1) an der Trägereinheit (21) eines Fahrzeug (5) beinhaltet ist, wobei zumindest ein Bein (10, 11, 15, 16, 17, 18) der Dreipunktaufhängung das Kugelgelenk (100, 200) umfasst.

## Claims

1. A vehicle headlamp (1), particularly for creating a main-beam and/or a dipped-beam light distribution, **characterized in that** a ball-and-socket joint (100, 200), a lighting module (2) and a supporting frame (20) are included, wherein the ball-and-socket joint (100, 200) connects the supporting frame (20) to the lighting module (2) or a support unit (21) located on the vehicle side and the ball-and-socket joint (100, 200) can be fixed in a joint position, wherein the ball-and-socket joint (100, 200) comprises:
a joint pin (110) which comprises a joint ball (111), which merges on one side into an end face of a joint shank (112), which is essentially cylindrically shaped,
a joint socket (120, 220) for accommodating the joint ball (111), and
a joint bush (140) for accommodating the joint socket (120, 220), **characterized in that**
the joint socket (120, 220) comprises at least two, preferably three wings (121, 221), which are arranged one after the other along the circumference of the joint socket (120, 220) and form an internal joint surface of the ball-and-socket joint (100, 200) on the joint ball (111) in the fixed state of the ball-and-socket joint (100, 200) and enclose the joint ball (111), which is shaped in a complementary manner to the surface of the joint ball (111) in the fixed state of the ball-and-socket joint (100, 200),
wherein the joint bush (140) is preferably surrounded by the supporting frame (20) or the support unit (21), wherein the joint bush (140) at least partially encloses the wings (121, 221) of the joint socket (120, 220),
wherein the ball-and-socket joint (100, 200) comprises at least one control contour (146; 126, 226), which is set up to exert a radial contact force on the joint ball (111) by means of a rotational movement between the joint socket (120, 220) and the joint bush (140) by means of the wings (121, 221) of the joint socket (120, 220) and the ball-and-socket joint (100, 200) can be fixed as a result, wherein a film hinge (124, 224) is formed between the two ends of the wings (121, 221) running along the circumference in each case.

2. The vehicle headlamp (1) according to Claim 1, **characterized in that** the at least one control contour (146; 126, 226) is formed by a first control contour (146), which is located on the joint bush (140), preferably in a region of the internal surface of the joint bush (140), particularly preferably in a region of the first opening (141) of the joint bush (140),
or the at least one control contour (146; 126, 226) is formed by a second control contour (126, 226), which is located on the joint socket (120, 220), preferably in a region of the outer surface of the joint socket (120, 220), particularly preferably on the outer surface of the wings (121, 221),
wherein the at least one second control contour (23) is located at one end of the wings (121, 221) and preferably in a region, the length of which is 20% of the length of the wings (121, 221), particularly preferably 10% of the length of the wings (121, 221),
or, in the assembled state of the ball-and-socket joint (100, 200), the at least one second control contour (126, 226) is located in a plane (128, 228) transverse to the installation direction (117) and the radial spacing thereof passes from a first radius (129, 229) at a first angle of rotation (130, 230) about the imagined longitudinal axis (122, 222) of the joint socket to a second radius (131, 231) at a second angle of rotation (132, 232) about the longitudinal axis (122, 222) of the joint socket, wherein the first radius (129, 229) is smaller than the second radius (131, 231) and the at least one second control contour (126, 226) preferably further passes to a third radius (133, 233) at a third angle of rotation (134, 234) about the imagined longitudinal axis (122, 222) of the joint socket, wherein the third radius (133, 233) preferably corresponds to the first radius (129, 229) or the third radius (133, 233) corresponds to the second radius (131, 231) and preferably the first angle of rotation (130, 230) compared to the second angle of rotation (132, 232) corresponds to the same amount as the second angle of rotation (132, 232) compared to the third angle of rotation (134, 234).

3. The vehicle headlamp (1) according to one of Claims 1 or 2, **characterized in that** the ball-and-socket joint (100, 200) comprises at least one control surface (127, 227; 147), which is set up to interact with the at least one control contour (146; 126, 226) and to press the at least one control contour (146; 126, 226) against the at least one control surface (127, 227; 147) and furthermore to prevent an axial slip between the joint socket (120, 220) and the joint bush (140) with respect to the installation direction (117),
wherein the at least one control surface (127, 227; 147) is formed by at least one control surface (127, 227), which is preferably located in a region of the outer surface of the joint socket (120, 220) and particularly preferably at the end of the wing (121, 221), which points in the installation direction (117),
or the at least one control surface (127, 227; 147) is formed by a second control surface (147), which is preferably located in a region of the internal surface of the joint bush (140),
wherein the at least one second control contour (126, 226) has at least one tab (135, 235) in the position of the second angle of rotation (132, 232), which extends axially and at a radial distance of the second radius (131, 231), and is set up to exert a radial contact force on the joint ball (111) by interaction with the second control surface (147).

4. The vehicle headlamp (1) according to one of Claims 1 to 3, **characterized in that** the wings (121, 221) extend in a non-adjusted state, in which an imagined longitudinal axis (114) of the joint shank (110) coincides with an imagined longitudinal axis (122, 222) of the joint socket (120, 220), at least up to a joint edge (113), wherein the joint edge (113) running along the circumference of the joint socket (120, 220) is formed on the surface of the joint pin (110) between the joint shank (112) and the joint ball (111),
wherein the wings (121, 221) of the joint socket (120, 220) run beyond the joint edge (113) in terms of their axial length and in this case, the radial distances of the internal side of the wings (121, 221) from the imagined axis (115) of the joint shank (112) at least do not get smaller,
and/or the wings (121, 221) have a tapering cross section in the radial direction between the two ends thereof,
wherein, in the fixed state of the ball-and-socket joint (100, 200), the wings (121, 221) are pressed against the joint ball by means of the joint bush (140) in each case in regions next to the cross section tapering in the radial direction, preferably in each case by means of a control contour (146; 126, 226) and a control surface (127, 227; 147) .

5. The vehicle headlamp (1) according to one of Claims 1 to 4, **characterized in that** the joint socket (120, 220) is delimited in the region of the wings (121, 221) thereof, in the outer contour thereof, by the shape of a truncated cone, wherein the truncated cone decreases in outer radius from the open ends of the wings (121, 221) to the region of the joint socket (120, 220) connecting the wings (121, 221).

6. The vehicle headlamp (1) according to one of Claims 1 to 5, **characterized in that** the wings (121, 221) are continuously connected to one another at one end along the circumference of the joint socket (120, 220) and form a common component.

7. The vehicle headlamp (1) according to one of Claims 1 to 6, **characterized in that** the joint socket (120, 220) has a terminating end face with a central second opening (125, 225), wherein the end face adjoins the region of the joint socket (120, 220) connecting the wings (121, 221).

8. The vehicle headlamp (1) according to Claim 7, **characterized in that** latching hooks (123, 223) are formed on the mutually connecting region of the joint socket (120, 220) and preferably along the circumference thereof, which are preferably set up to prevent an axial slippage of the joint socket (120, 220) directed counter to the installation direction (117) of the joint pin (110).

9. The vehicle headlamp (1) according to Claim 8, **characterized in that** the latching hooks (123, 223) are arranged along the circumference between the wings (121, 221) and preferably formed in a u-shaped and preferably elastically deformable manner.

10. The vehicle headlamp (1) according to Claim 2, if the at least one control contour (146; 126, 226) is formed by the second control contour (126, 226), and one of Claims 8 or 9, **characterized in that** the at least one second control contour (126, 226) located in the plane (128, 228) is set up to exert an axial contact force between the joint bush (140) and the joint socket (120, 220) in the direction of the imagined longitudinal axis (122, 222) of the joint socket with the joint bush (140) and the latching hooks (123, 223) of the joint socket (120, 220) with a run-on bevel (142).

11. The vehicle headlamp (1) according to one of Claims 1 to 10, **characterized in that** the joint bush (140) comprises the at least one run-on bevel (142), which is arranged along the circumference of an imagined circle, wherein the imagined circle is located concentrically around the first opening (141) of the joint bush (140).

12. The vehicle headlamp (1) according to Claim 11, **characterized in that** the latching hooks (123, 223) slide on the run-on bevel (142) during an axial rotation of the joint socket (120, 220) with respect to the joint bush (140) and in the process exert a tensile force, which presses the joint socket (120, 220) into the joint bush (140).

13. The vehicle headlamp (1) according to one of Claims 1 to 12, **characterized in that** the ball-and-socket joint (100, 200) is arranged on or inside the vehicle headlamp (1) and is set up to fix the vehicle headlamp (1) in an installation position, wherein the vehicle headlamp (1) comprises a fixed leg (11) and two variable legs (17, 18) for fastening the vehicle headlamp (1) on a vehicle (5), wherein the legs (11, 17, 18) together form an adjustment triangle, using which the headlamp (1) is connected in an adjustable manner to a support unit (21) of the vehicle (5), wherein the fixed leg (11) and the adjustable legs (17, 18) encompass one ball-and-socket joint (100, 200) at one end in each case.

14. The vehicle headlamp (1) according to one of Claims 1 to 13, **characterized in that** a three-point suspension with three legs (10, 11, 15, 16, 17, 18) is further contained for fastening the lighting module (2) on the vehicle headlamp (1) or the vehicle headlamp (1) on the support unit (21) of a vehicle (5), wherein at least one leg (10, 11, 15, 16, 17, 18) of the three-point suspension encompasses the ball-and-socket joint (100, 200).

## Revendications

1. Phare de véhicule (1), en particulier pour la génération d'une distribution de lumière par des feux de route et des feux de croisement, **caractérisé en ce qu'**il est compris un joint à rotule (100, 200), un module lumineux (2) et un cadre support (20), le joint à rotule (100, 200) connectant le cadre support (20) au module lumineux (2) ou à une unité porteuse (21) située au niveau du véhicule et que le joint à rotule (100, 200) peut être fixé dans une position articulée, le joint à rotule (100, 200) comprenant :
un tourillon d'articulation (110) qui comprend une sphère d'articulation (111) qui, sur une face, transite dans une face frontale d'une tige d'articulation (112) de forme sensiblement cylindrique,
une calotte d'articulation (120, 220) destinée à recevoir la sphère d'articulation (111) et
un manchon d'articulation (140) destiné à recevoir la calotte d'articulation (120, 220), **caractérisé en ce que**
la calotte d'articulation (120, 220) comprend au moins deux, de préférence trois, ailes (121, 221) qui sont disposées successivement le long de la circonférence de la calotte d'articulation (120, 220) et, en état fixé sur la sphère d'articulation (111) du joint à rotule (100, 200), constituent une surface d'articulation intérieure du joint à rotule (100, 200) et entourent la sphère d'articulation (111) qui, en état fixé du joint à rotule (100, 200), est conformée de manière complémentaire à la surface de la sphère d'articulation (111),
le manchon d'articulation (140) étant de préférence compris dans le cadre support (20) ou l'unité porteuse (21), le manchon d'articulation (140) entourant au moins partiellement les ailes (121, 221) de la calotte d'articulation (120, 220),
le joint à rotule (100, 200) comprenant au moins un contour de commande (146 ; 126, 226) qui est conçu pour, par un mouvement rotatif entre la calotte d'articulation (120, 220) et le manchon d'articulation (140), par l'intermédiaire des ailes (121, 221) de la calotte d'articulation (120, 220), exercer une force de compression radiale sur la sphère d'articulation (111) et le joint à rotule (100, 200) pouvant ainsi être fixé par le fait que respectivement une charnière en film (124, 224) s'étendant le long de la circonférence étant constituée entre les deux extrémités des ailes (121, 221).

2. Phare de véhicule (1) selon la revendication 1, **caractérisé en ce que** l'au moins un contour de commande (146 ; 126, 226) est constitué par un premier contour de commande (146) qui se situe au niveau du manchon d'articulation (140), de préférence dans une zone de la surface intérieure du manchon d'articulation (140), très préférentiellement dans une zone de la première ouverture (141) du manchon d'articulation (140),
ou que l'au moins un contour de commande (146 ; 126, 226) est constitué par un second contour de commande (126, 226) qui se situe dans la calotte d'articulation (120, 220), de préférence dans une zone de la surface extérieure de la calotte d'articulation (120, 220), très préférentiellement sur la surface extérieure des ailes (121, 221),
l'au moins un second contour de commande (23) se situant à une extrémité des ailes (121, 221) et de préférence dans une zone dont la longueur représente 20 % de la longueur des ailes (121, 221), très préférentiellement 10 % de la longueur des ailes (121, 221),
ou l'au moins un second contour de commande (126, 226), en état assemblé du joint à rotule (100, 200), se situant dans un plan (128, 228) perpendiculaire au sens de montage (117) et dont la distance radiale depuis un premier rayon (129, 229) transite dans un premier angle de rotation (130, 230) autour de l'axe longitudinal imaginaire (122, 222) de la calotte d'articulation vers un deuxième rayon (131, 231) dans un deuxième angle de rotation (132, 232) autour de l'axe longitudinal imaginaire (122, 222) de la calotte d'articulation, le premier rayon (129, 229) étant inférieur au deuxième rayon (131, 231), et l'au moins un second contour de commande (126, 226) transite de préférence plus loin vers un troisième rayon (133, 233) dans un troisième angle de rotation (134, 234) autour de l'axe longitudinal imaginaire (122, 222) de la calotte d'articulation, le troisième rayon (133, 233) équivalant de préférence au premier rayon (129, 229), ou le troisième rayon (133, 233) équivalant au deuxième rayon (131, 231) et le premier angle de rotation (130, 230) équivalant de préférence par rapport au deuxième angle de rotation (132, 232) à la même amplitude que le deuxième angle de rotation (132, 232) par rapport au troisième angle de rotation (134, 234).

3. Phare de véhicule (1) selon une des revendications 1 ou 2, **caractérisé en ce que** le joint à rotule (100, 200) comprend au moins une surface de commande (127, 127 ; 147) qui est conçue pour interagir avec l'au moins un contour de commande (146 ; 126, 226) et comprimer l'au moins un contour de commande (146 ; 126, 226) contre l'au moins une surface de commande (127, 227 ; 147) et empêcher en outre un dérapage axial entre la calotte d'articulation (120, 220) et le manchon d'articulation (140) dans le sens inverse du sens de montage (117),
l'au moins une surface de commande (127, 227 ; 147) étant constituée par au moins une première surface de commande (127, 227) qui se situe de préférence dans une zone de la surface extérieure de la calotte d'articulation (120, 220) et très préférentiellement à l'extrémité des ailes (121, 221) qui est orientée dans le sens de montage (117),
ou l'au moins une surface de commande (127, 227 ; 147) étant constituée par une seconde surface de commande (147) qui est située de préférence dans une zone de la surface intérieure du manchon d'articulation (140),
dans la position du deuxième angle de rotation (132, 232), l'au moins un second contour de commande (126, 226) présentant au moins une bride (135, 235) qui s'étend axialement et à une distance radiale du deuxième rayon (131, 231) et est conçue pour, par interaction avec la seconde surface de commande (147), exercer une force de compression radiale sur la sphère d'articulation (111) .

4. Phare de véhicule (1) selon une des revendications 1 à 3, **caractérisé en ce que** les ailes (121, 221), dans un état non réglé dans lequel un axe longitudinal imaginaire (114) du tourillon d'articulation (110) coïncide avec un axe longitudinal imaginaire (122, 222) de la calotte d'articulation (120, 220), s'étendent au moins jusqu'à une arête d'articulation (113), l'arête d'articulation (113) s'étendant le long de la circonférence de la calotte d'articulation (120, 220) étant constituée sur la surface du tourillon articulation (110), entre la tige d'articulation (112) et la sphère d'articulation (111),
les ailes (121, 221) de la calotte d'articulation (120, 220) s'étendant dans leur longueur axiale au-delà de l'arête d'articulation (113) et les distances radiales entre la face intérieure des ailes (121, 221) et l'axe imaginaire (115) de la tige d'articulation (112) ne devenant du moins alors pas moindres,
et/ou les ailes (121, 221) présentant, entre les deux extrémités, une section transversale rétrécie dans le sens radial,
les ailes (121, 221), en état fixé de la sphère d'articulation (100, 200), étant comprimées par le manchon d'articulation (140) respectivement dans des zones proches de la section transversale rétrécie dans le sens axial contre la sphère d'articulation, de préférence respectivement par un contour de commande (146 ; 126, 226) et une surface de commande (127, 227 ; 147).

5. Phare de véhicule (1) selon une des revendications 1 à 4, **caractérisé en ce que** la calotte d'articulation (120, 220), au niveau de ses ailes (121, 221), est limitée dans son contour extérieur par la forme d'un tronc conique, le tronc conique diminuant pour ce qui est de son rayon extérieur depuis les extrémités ouvertes des ailes (121, 221) en direction de la zone connectant les ailes (121, 221) de la calotte d'articulation (120, 220) .

6. Phare de véhicule (1) selon une des revendications 1 à 5, **caractérisé en ce que** les ailes (121, 221) sont connectées en continu entre elles à une extrémité le long de la circonférence de la calotte d'articulation (120, 220) et forment une pièce commune.

7. Phare de véhicule (1) selon une des revendications 1 à 6, **caractérisé en ce que** la calotte d'articulation (120, 220) présente une face frontale terminale dotée d'un second orifice centré (125, 225), la face frontale étant adjacente à la zone connectant les ailes (121, 221) de la calotte d'articulation (120, 220).

8. Phare de véhicule (1) selon la revendication 7, **caractérisé en ce que**, dans la zone de connexion mutuelle de la calotte d'articulation (120, 220) et de préférence le long de sa circonférence, sont réalisés des crochets d'enclenchement (123, 223) qui sont de préférence orientés de manière à empêcher un dérapage axial de la calotte d'articulation (120, 220) dirigé à l'inverse du sens de montage (117) du tourillon d'articulation (110) .

9. Phare de véhicule (1) selon la revendication 8, **caractérisé en ce que** les crochets d'enclenchement (123, 223) sont disposés le long de la circonférence entre les ailes (121, 221) et sont réalisés de préférence en forme de U et de préférence élastiquement déformables.

10. Phare de véhicule (1) selon la revendication 2 si l'au moins un contour de commande (146 ; 126, 226) est constitué par le second contour de commande (126, 226) et une des revendications 8 ou 9, **caractérisé en ce que** l'au moins un second contour de commande (126, 226) situé dans le plan (128, 228) est conçu pour exercer avec le manchon d'articulation (140) et les crochets d'enclenchement (123, 223) de la calotte d'articulation (120, 220), par une pente d'arrivée (142), une force de compression axiale en direction de l'axe longitudinal imaginaire (122, 222) de la calotte d'articulation entre le manchon d'articulation (140) et la calotte d'articulation (120, 220).

11. Phare de véhicule (1) selon une des revendications 1 à 10, **caractérisé en ce que** le manchon d'articulation (140) comprend l'au moins une pente d'arrivée (142) qui est disposée le long de la circonférence d'un cercle imaginaire, le cercle imaginaire étant positionné concentriquement autour de la première ouverture (141) du manchon d'articulation (140).

12. Phare de véhicule (1) selon la revendication 11, **caractérisé en ce que** les crochets d'enclenchement (123, 223), en cas de décalage axial de la calotte d'articulation (120, 220) par rapport au manchon d'articulation (140), glissent sur la surface d'arrivée (142) et exercent alors axialement une force de traction qui comprime la calotte d'articulation (120, 220) dans le manchon d'articulation (140).

13. Phare de véhicule (1) selon une des revendications 1 à 12, **caractérisé en ce que** le joint à rotule (100, 200) est disposé au niveau du phare de véhicule (1) ou à l'intérieur et est conçu pour fixer le phare de véhicule (1) dans une position de montage, le phare de véhicule (1) comprenant un pied fixe (11) et deux pieds variables (17, 18) pour fixer le phare de véhicule (1) à un véhicule (5), les pieds (11, 17, 18) formant ensemble un triangle de réglage par lequel le phare (1) est connecté de manière réglable à une unité porteuse (21) du véhicule (5), le pied fixe (11) et les pieds réglables (17, 18) comprenant alors à une extrémité respectivement un joint à rotule (100, 200) .

14. Phare de véhicule (1) selon une des revendications 1 à 13, **caractérisé en ce qu'**il est compris en outre une suspension à trois points (10, 11, 15, 16, 17, 18) pour la fixation du module lumineux (2) au phare de véhicule (1) ou du phare de véhicule (1) à l'unité porteuse (21) d'un véhicule (5), au moins un pied (10, 11, 15, 16, 17, 18) de la suspension à trois points englobant le joint à rotule (100, 200).
